# EUROPEAN PATENT APPLICATION

(11) **EP 4 080 927 A1**
(43) Date of publication of application: **26.10.2022**
(21) Application number: 20911887.6
(22) Date of filing: 28.12.2020
(51) Int. Cl.: H04W 12/06

(54) **METHOD AND APPARATUS FOR CHECKING RELAY USER EQUIPMENT**

(30) Priority: 08.01.2020 CN 202010018580
(71) Applicant: Huawei Technologies Co., Ltd., Shenzhen, Guangdong 518129 (CN)
(72) Inventor: ZHANG, Bo, Shenzhen, Guangdong 518129 (CN)
(74) Representative: Gill Jennings & Every LLP
(86) International application number: PCT/CN2020/139982
(87) International publication number: WO 2021/139552

(57) **Abstract**

Embodiments of this application disclose a relay user equipment verification method and an apparatus. The method includes: When establishing communication with second user equipment through relay user equipment, first user equipment includes, in a connection request, a token generated by the first user equipment. The second user equipment determines, by verifying the token, whether the relay user equipment is authorized by the first user equipment. If the second user equipment successfully verifies the token, the second user equipment sends a connection response message, to prevent unauthorized relay user equipment from maliciously calling the second user equipment to obtain information about the second user equipment.

## Description

This application claims priority to Chinese Patent Application No. 202010018580.2, filed with the China National Intellectual Property Administration on January 8, 2020 and entitled "RELAY USER EQUIPMENT VERIFICATION METHOD AND APPARATUS", which is incorporated herein by reference in its entirety.

### TECHNICAL FIELD

This application relates to the field of communication technologies, and in particular, to a relay user equipment verification method and an apparatus.

### BACKGROUND

A proximity service (Proximity Service, ProSe) is a service provided by a 3rd generation partnership project (3rd Generation Partnership Project, 3GPP) system for user equipments (User Equipments, UEs) that are close to each other. The ProSe may support a plurality of application scenarios such as public safety, an internet of things, and an internet of vehicles. A ProSe technology mainly includes two aspects: ProSe discovery (ProSe Discovery) and ProSe communication (ProSe Communication). The ProSe discovery is a process in which UEs can perform mutual detection to complete identity verification. The ProSe communication is a process in which a secure communication channel is established between UEs to perform secure data communication.

In a ProSe scenario, when source UE cannot directly communicate with target UE, the source UE may communicate with the target UE through UE having a relay function (UE-to-UE relay, relay UE for short below). For example, the source UE sends an identifier of the source UE and an identifier of the target UE to the relay UE, and the relay UE may determine the target UE based on the identifier of the target UE and send a message to the target UE. If the target UE agrees to perform communication, the target UE sends a response to the UE through the relay UE. In the foregoing scenario in which the relay UE is used for communication, if the relay UE is hijacked, the relay UE may send a message to the target UE at any time and receive a response from the target UE. Consequently, there is a risk that the relay UE obtains information about the target UE by using a malicious call.

### SUMMARY

This application provides a relay user equipment (relay UE) verification method and an apparatus, to improve security of communication performed through relay UE, so as to resolve a problem that when UE establishes communication with target UE through relay UE, the relay UE maliciously calls the target UE.

According to a first aspect, an embodiment of this application provides a relay UE verification method. The method is applicable to a scenario in which first user equipment (UE 1) establishes communication with second user equipment (UE 2) through relay user equipment (relay UE), and includes:

The UE 1 receives a message sent by the relay UE, where the message carries a relay UE identifier; the UE 1 sends a first connection request message to the relay UE, where the first connection request message includes a first token, and the first token is generated based on a first key K1 and the relay UE identifier; the UE 2 receives a second connection request message sent by the relay UE, where the second connection message includes the first token and the relay UE identifier; the UE 2 verifies the first token by using the relay UE identifier and a second key K2; if the first token is successfully verified, the UE 2 sends a connection response message to the relay UE; and the UE 1 receives the connection response message from the relay UE.

The UE 1 receives the message sent by the relay UE. The message may be a broadcast message, or may be a message received by the UE 1 when or after the UE 1 establishes secure communication with the relay UE.

In a possible implementation, after receiving the message sent by the relay UE, the UE 1 verifies an identity of the relay UE. If the UE 1 fails to verify the identity of the relay UE, the UE 1 terminates the procedure.

The UE 1 generates the first token by using the first key K1 and the relay UE identifier. Input parameters used by the UE 1 to generate the first token may further include an identifier of the UE 1, an identifier of the UE 2, a first fresh parameter, and the like. In a possible implementation, the UE 1 and the UE 2 belong to a same group. In this case, the identifier of the UE 2 in the input parameters used by the UE 1 to generate the first token may be replaced with a group identifier.

The UE 1 sends the first connection request message to the relay UE, where the first connection request message carries the first token, and further carries the identifier of the UE 1, the identifier of the UE 2/the group identifier, and the optional first fresh parameter.

The relay UE sends the second connection request message after receiving the first connection request message. The second connection request message includes the first token, and further includes the relay UE identifier, the identifier of the UE 1, the identifier of the UE 2/the group identifier, and the optional first fresh parameter. In a possible implementation, the relay UE sends the second connection request message through broadcast, and the UE 2 obtains the second connection request message by monitoring a broadcast message sent by the relay UE. In another possible implementation, when the relay UE has established a secure connection to the UE 2, the relay UE directly sends the second connection request message to the UE 2.

In a possible implementation, the second connection request sent by the relay UE carries a digital signature of the relay UE. After receiving the second connection request, the UE 2 verifies the identity of the relay UE. Specifically, the UE 2 may verify the digital signature of the first UE by using a public key of the relay UE, to obtain a verification result of the digital signature. If the UE 2 fails to verify the identity of the relay UE, the UE 2 terminates the procedure. If the UE 2 successfully verifies the identity of the relay UE, the UE 2 continues to verify the first token.

After receiving the second connection request message sent by the relay UE, the UE 2 verifies the first token.

In a possible implementation, before verifying the first token, the UE 2 determines whether the relay UE is in a trusted list. Specifically, the UE 2 matches the relay UE identifier with a relay identifier in the trusted list to obtain a matching result. If the matching result is that the matching fails, the UE 2 verifies the first token. If the UE 2 successfully verifies the first token, the UE 2 adds the relay UE identifier to the trusted list. If the matching result is that the matching succeeds, the UE 2 does not need to verify the first token, so that communication establishment duration is shortened and efficiency is improved.

That the UE 2 verifies the first token includes: The UE 2 performs calculation by using the relay UE identifier and the second key K2 as input parameters to obtain a token, and matches the obtained token with the first token to obtain a verification result. In a possible implementation, K1 and K2 are symmetric keys, the UE 1 stores K1, and the UE 2 stores K2. In another possible implementation, K1 is a private key of the UE 1, and K2 is a public key that corresponds to the private key K1 and that is stored in the UE 2.

In a possible implementation, after the UE 2 successfully verifies the first token or successfully matches the relay UE identifier with the trusted list, the UE 2 generates a third key K3, and uses K3 as an encryption key and/or an integrity protection key for communication between the UE 1 and the UE 2. Specifically, the UE 2 generates K3 based on K2. The UE 2 may alternatively generate K3 based on at least one of the relay UE identifier, the identifier of the UE 1, the identifier of the UE 2, the first fresh parameter, a second fresh parameter, a service identifier, and an application identifier.

The UE 2 sends the connection response message to the relay UE. After receiving the connection response message, the relay UE sends the connection response message to the UE 1.

In a possible implementation, the UE 2 performs encryption and/or integrity protection on the connection response message by using K3. After receiving the connection response message, the UE 1 generates K3 based on K1, and performs decryption and/or integrity verification on the connection response message by using K3.

In another possible implementation, that the UE 2 further generates a third token after the UE 2 successfully verifies the first token includes: The UE 2 performs calculation by using K2 or K3, the relay UE identifier, the identifier of the UE 1, the identifier of the UE 2, and the second fresh parameter as parameters, to generate the third token. After generating the third token, the UE 2 sends the connection response message to the relay UE, where the connection response message carries the third token. After receiving the connection response message, the UE 1 generates K3 based on K1, and verifies the third token by using K1 or K3. After successfully verifying the third token, the UE 1 uses K3 as an encryption key and/or an integrity protection key for communication between the UE 1 and the UE 2.

According to the method in the possible implementations of the first aspect, in a possible implementation, when the relay UE sends the second connection request message through broadcast, second relay UE obtains the connection request message, and sends a third connection request message to the UE 2, where the third connection request message carries the first token; and the third connection request message further carries an second relay UE identifier, the identifier of the UE 1, the identifier of the UE 2, and the optional first fresh parameter. The UE 2 verifies the first token after receiving the third connection message includes: The UE 2 performs calculation by using the second relay UE identifier and K3 as input parameters to obtain a token, and matches the obtained token with the first token to obtain a verification result.

According to a second aspect, an embodiment of this application provides a relay UE verification method, and the method is performed by first user equipment UE 1, namely, user equipment that initiates a connection request. The method is applicable to a scenario in which the first user equipment (UE 1) establishes communication with second user equipment (UE 2) through relay user equipment (relay UE), and the method includes:

The UE 1 receives a message sent by the relay UE, where the message carries a relay UE identifier; the UE 1 sends a first connection request message to the relay UE, where the first connection request message includes a first token, and the first token is generated based on a first key K1 and the relay UE identifier; and the UE 1 receives a connection response of the relay UE.

The UE 1 receives the message sent by the relay UE. The message may be a broadcast message, or may be a message received by the UE 1 when or after the UE 1 establishes secure communication with the relay UE.

In a possible implementation, after receiving the message sent by the relay UE, the UE 1 verifies an identity of the relay UE. If the UE 1 fails to verify the identity of the relay UE, the UE 1 terminates the procedure.

The UE 1 generates the first token by using the first key K1 and the relay UE identifier. Input parameters used by the UE 1 to generate the first token may further include an identifier of the UE 1, an identifier of the UE 2, a first fresh parameter, and the like. In a possible implementation, the UE 1 and the UE 2 belong to a same group. In this case, the identifier of the UE 2 in the input parameters used by the UE 1 to generate the first token may be replaced with a group identifier.

The UE 1 sends the first connection request message to the relay UE, where the first connection request message carries the first token, so that the UE 2 can verify the relay UE based on the first token after receiving the connection request of the relay UE. The first connection request message further carries the identifier of the UE 1, the identifier of the UE 2/the group identifier, and the optional first fresh parameter.

The UE 1 receives the connection response of the relay UE. The connection response is used to indicate that the UE 2 successfully verifies the relay UE authorized by the UE 1. In a possible implementation, encryption and/or integrity protection are/is performed on the connection response by using a third key K3. After receiving the connection response, the UE 1 generates K3 based on K1, and performs decryption and/or integrity verification on the connection response message based on K3. In another possible implementation, the connection response message carries a third token generated by the UE 2. After receiving the connection response, the UE 1 generates a third key K3 based on K1, and verifies the third token by using K1 or K3. If the UE 1 successfully verifies the third token, the UE 1 uses K3 as an encryption key and/or an integrity key for communication between the UE 1 and the UE 2.

According to a third aspect, an embodiment of this application provides a relay UE verification method, and the method is performed by second user equipment UE 2, namely, user equipment that receives a connection request. The method is applicable to a scenario in which first user equipment (UE 1) establishes communication with the second user equipment (UE 2) through relay user equipment (relay UE), and the method includes:

The UE 2 receives a second connection request message, where the second connection request message carries a first token. After receiving the second connection request message, the UE 2 verifies the first token. If the verification on the first token succeeds, the UE 2 sends a connection response message to the relay UE, so that the relay UE sends the connection response message to the UE 1 after receiving the connection response message.

The UE 2 receives the second connection request message, where the second connection request message further carries a relay UE identifier, an identifier of the UE 1, an identifier of the UE 2, and an optional first fresh parameter. In a possible implementation, the UE 1 and the UE 2 belong to a same group. In this case, the identifier of the UE 2 in the second connection request message may be replaced with a group identifier.

In a possible implementation, the second connection request message further carries a digital signature of the relay UE. After receiving the second connection request, the UE 2 may verify an identity of the relay UE. Specifically, the UE 2 may verify the digital signature of the first UE by using a public key of the relay UE, to obtain a verification result of the digital signature. If the UE 2 fails to verify the identity of the relay UE, the UE 2 terminates the procedure. If the UE 2 successfully verifies the identity of the relay UE, the UE 2 continues to verify the first token.

In a possible implementation, the UE 2 maintains a trusted list. Before verifying the first token, the UE 2 determines whether the relay UE is in the trusted list. Specifically, the UE 2 matches the relay UE identifier with a relay identifier in the trusted list to obtain a matching result. If the matching result is that the matching fails, the UE 2 verifies the first token. If the UE 2 successfully verifies the first token, the UE 2 adds the relay UE identifier to the trusted list. If the matching result is that the matching succeeds, the UE 2 does not need to verify the first token, so that communication establishment duration is shortened and efficiency is improved.

That the UE 2 verifies the first token includes: The UE 2 performs calculation by using the relay UE identifier and a second key K2 as input parameters to obtain a second token, and matches the obtained second token with the first token to obtain a verification result. In a possible implementation, the first key K1 and K2 are symmetric keys, the UE 1 stores K1, and the UE 2 stores K2. In another possible implementation, K1 is a private key of the UE 1, and K2 is a public key that corresponds to the private key K1 and that is stored in the UE 2. K1 is an input parameter used by the UE 1 to generate the first token.

In a possible implementation, after successfully verifying the first token, the UE 2 generates a third key K3, and uses K3 as an encryption key and/or an integrity protection key for communication between the UE 1 and the UE 2. Specifically, the UE 2 generates K3 based on K2. The UE 2 may alternatively generate K3 based on at least one of the relay UE identifier, the identifier of the UE 1, the identifier of the UE 2, the first fresh parameter, a second fresh parameter, a service identifier, and an application identifier.

The UE 2 sends the connection response message to the relay UE. After receiving the connection response message, the relay UE sends the connection response message to the UE 1.

In a possible implementation, the UE 2 performs encryption and/or integrity protection on the connection response message by using K3. After receiving the connection response message, the UE 1 generates K3 based on K1, and performs decryption and/or integrity verification on the connection response message by using K3.

In another possible implementation, that the UE 2 further generates a second token after successfully verifying the first token includes: The UE 2 performs calculation by using K2 or K3, the relay UE identifier, the identifier of the UE 1, the identifier of the UE 2, and the second fresh parameter as parameters, to generate the second token. The UE 2 sends the connection response message to the relay UE, where the connection response message carries the second token.

According to a fourth aspect, a communication system is provided. The system includes first user equipment UE 1, second user equipment UE 2, and relay user equipment (relay UE). The UE 1 establishes communication with the UE 2 through the relay UE.

The UE 1 in the system has a function of implementing behavior of the first user equipment UE 1 in any possible implementation of the first aspect, the UE 2 has a function of implementing behavior of the second user equipment UE 2 in any possible implementation of the first aspect, and the relay UE has a function of implementing behavior of the relay UE in any possible implementation of the first aspect.

According to a fifth aspect, an apparatus is provided. The apparatus includes:
a receiving module, configured to receive a message sent by relay UE, where the message carries a relay UE identifier; a processing module, configured to: generate a first token, where the processing module is specifically configured to perform calculation by using a first key K1 and the received relay UE identifier as input parameters, to obtain the first token; and a sending module, configured to send a first connection request message to the relay UE, where the first connection request message includes the first token generated by the processing module, and the receiving module is further configured to receive a connection response of the relay UE.

The apparatus has a function of implementing behavior of the first user equipment UE 1 in any possible implementation of the first aspect or the second aspect.

According to a sixth aspect, an apparatus is provided. The apparatus includes:
a receiving module, configured to receive a connection request message sent by relay user equipment (relay UE), where the connection request message includes a first token; a processing module, configured to verify the first token; and a sending module, configured to: when the processing module successfully verifies the first token, send a connection response message to the relay UE.

The apparatus has a function of implementing behavior of the second user equipment UE 2 in any possible implementation of the first aspect or the third aspect.

According to a seventh aspect, an apparatus is provided. The apparatus includes:
a receiving module, configured to receive a first connection request message sent by first user equipment UE 1, where the first connection request message includes a first token; and a sending module, configured to send a second connection request message, where the second connection request message includes the first token and an identifier of the apparatus.

The apparatus has a function of implementing behavior of the relay user equipment (relay UE) in any possible implementation of the first aspect.

According to an eighth aspect, an apparatus is provided. The apparatus includes:
a receiving module, configured to receive a connection request message sent by relay user equipment (relay UE), where the connection request message includes a first token; and a sending module, configured to send a third connection request message, where the third connection request message includes the first token and an identifier of the apparatus.

The apparatus has a function of implementing behavior of the second relay user equipment (second relay UE) in any possible implementation of the first aspect.

According to a ninth aspect, a device is provided. The device includes a storage unit configured to store computer instructions, a communication interface configured to send and receive data, and a processor coupled to the storage unit and the communication interface.

The processor executes the computer instructions to implement a function of implementing behavior of the first user equipment UE 1 in any possible design of the first aspect.

According to a tenth aspect, a device is provided. The device includes a storage unit configured to store computer instructions, a communication interface configured to send and receive data, and a processor coupled to the storage unit and the communication interface.

The processor executes the computer instructions to implement a function of implementing behavior of the first user equipment UE 1 in any possible design of the second aspect.

According to an eleventh aspect, a device is provided. The device includes a storage unit configured to store computer instructions, a communication interface configured to send and receive data, and a processor coupled to the storage unit and the communication interface.

The processor executes the computer instructions to implement a function of implementing behavior of the second user equipment UE 2 in any possible design of the first aspect.

According to a twelfth aspect, a device is provided. The device includes a storage unit configured to store computer instructions, a communication interface configured to send and receive data, and a processor coupled to the storage unit and the communication interface.

The processor executes the computer instructions to implement a function of implementing behavior of the second user equipment UE 2 in any possible design of the third aspect.

According to a thirteenth aspect, a device is provided. The device includes a storage unit configured to store computer instructions, a communication interface configured to send and receive data, and a processor coupled to the storage unit and the communication interface.

The processor executes the computer instructions to implement a function of implementing behavior of the relay user equipment in any possible design of the first aspect.

According to a fourteenth aspect, a device is provided. The device includes a storage unit configured to store computer instructions, a communication interface configured to send and receive data, and a processor coupled to the storage unit and the communication interface.

The processor executes the computer instructions to implement a function of implementing behavior of the second relay user equipment in any possible design of the first aspect.

According to a fifteenth aspect, a device is provided. The device includes a communication interface configured to send and receive data, and a processor coupled to the communication interface.

The processor has a function of implementing behavior of the user equipment UE in any possible design of the first aspect. The processor further performs, through the communication interface, data sending and receiving related to the first user equipment UE 1 in any possible design of the first aspect.

According to a sixteenth aspect, a device is provided. The device includes a communication interface configured to send and receive data, and a processor coupled to the communication interface.

The processor has a function of implementing behavior of the user equipment UE in any possible design of the first aspect. The processor further performs, through the communication interface, data sending and receiving related to the first user equipment UE 1 in any possible design of the second aspect.

According to a seventeenth aspect, a device is provided. The device includes a communication interface configured to send and receive data, and a processor coupled to the communication interface.

The processor has a function of implementing behavior of the user equipment UE in any possible design of the first aspect. The processor further performs, through the communication interface, data sending and receiving related to the second user equipment UE 2 in any possible design of the first aspect.

According to an eighteenth aspect, a device is provided. The device includes a communication interface configured to send and receive data, and a processor coupled to the communication interface.

The processor has a function of implementing behavior of the user equipment UE in any possible design of the first aspect. The processor further performs, through the communication interface, data sending and receiving related to the second user equipment UE 2 in any possible design of the third aspect.

According to a nineteenth aspect, a device is provided. The device includes a communication interface configured to send and receive data, and a processor coupled to the communication interface.

The processor has a function of implementing behavior of the user equipment UE in any possible design of the first aspect. The processor further performs, through the communication interface, data sending and receiving related to the relay user equipment in any possible design of the first aspect.

According to a twentieth aspect, a device is provided. The device includes a communication interface configured to send and receive data, and a processor coupled to the communication interface.

The processor has a function of implementing behavior of the user equipment UE in any possible design of the first aspect. The processor further performs, through the communication interface, data sending and receiving related to the second relay user equipment in any possible design of the first aspect.

According to a twenty-first aspect, a non-volatile computer readable storage medium is provided. The non-volatile computer readable storage medium stores a computer program, and the computer program is executed by a processor to complete some or all of the steps of any method performed by any device provided in embodiments of this application.

According to a twenty-second aspect, a computer program product is provided. When the computer program product runs on a computer device, the computer device is enabled to perform some or all of the steps of any method performed by any device provided in embodiments of this application.

### BRIEF DESCRIPTION OF DRAWINGS

To describe technical solutions in embodiments of this application or in the background more clearly, the following briefly describes the accompanying drawings for describing embodiments of this application or the background.
FIG. 1a, FIG. 1b, and FIG. 1c are schematic diagrams of three application scenarios according to embodiments of this application;
FIG. 2 is a schematic interaction diagram in which UE 1 communicates with UE 2 through relay UE;
FIG. 3 is a schematic interaction diagram of a relay UE verification method according to an embodiment of this application;
FIG. 4 is a schematic flowchart of a relay UE verification method performed by UE 2 according to an embodiment of this application;
FIG. 5 is a schematic interaction diagram of another relay UE verification method according to an embodiment of this application;
FIG. 6 is a schematic flowchart of another relay UE verification method performed by UE 2 according to an embodiment of this application;
FIG. 7A and FIG. 7B are a schematic interaction diagram of another relay UE verification method according to an embodiment of this application;
FIG. 8 is a schematic interaction diagram of another relay UE verification method according to an embodiment of this application;
FIG. 9 is a schematic interaction diagram of another relay UE verification method according to an embodiment of this application;
FIG. 10 is a schematic interaction diagram of searching based on a group member agent of relay UE according to an embodiment of this application;
FIG. 11 is a schematic diagram of a structure of an apparatus according to an embodiment of this application;
FIG. 12 is a schematic diagram of a structure of an apparatus according to an embodiment of this application;
FIG. 13 is a schematic diagram of a structure of an apparatus according to an embodiment of this application;
FIG. 14 is a schematic diagram of a structure of a communication device according to an embodiment of this application; and
FIG. 15 is a schematic diagram of a structure of a communication device according to an embodiment of this application.

### DESCRIPTION OF EMBODIMENTS

Embodiments of this application provide a relay user equipment (relay UE) verification method and an apparatus, to verify, when source UE establishes secure communication with target UE through relay UE, whether the relay UE is authorized by the source UE. The method and the apparatus are based on a same inventive concept. Because a problem-resolving principle of the method is similar to that of the apparatus, mutual reference may be made between implementations of the apparatus and the method. No repeated descriptions are provided.

A proximity service (Proximity Service, ProSe) is a service provided by a 3rd generation partnership project (3rd Generation Partnership Project, 3GPP) system for user equipments (User Equipments, UEs) that are close to each other. UEs that support the ProSe can directly communicate with each other within a particular range. When source UE cannot directly communicate with target UE due to a distance or another reason, the source UE may communicate with the target UE through UE having a relay function (UE-to-UE relay, relay UE for short below).

Some terms in embodiments of this application are first described to help a person skilled in the art have a better understanding.
(1) User equipment (User Equipment, UE): This application relates to first user equipment (UE 1), second user equipment (UE 2), relay user equipment (relay UE), first relay user equipment (first relay UE), and second relay user equipment (second relay UE). The relay UE, the first relay UE, and the second relay UE are UEs having a relay function.
   The UE in this application is a logical entity, and may specifically include but is not limited to various devices having a wireless communication function, or a unit, a component, a module, an apparatus, a chip, or a system-on-a-chip in the devices. The device having the wireless communication function may be but is not limited to any one of a terminal device (Terminal Device), a communication device (Communication Device), an internet of things (Internet of Things, IoT) device, a device-to-device (device-to-device, D2D) terminal device, a vehicle to everything (vehicle to everything, V2X) terminal device, a machine-to-machine/machine type communication (machine-to-machine/machine type communication, M2M/MTC) terminal device, and an internet of vehicles device. The terminal device may be a smartphone (smartphone), a smart watch (smart watch), a smart tablet (smart tablet), smart glasses, another wearable device, or the like. The communication device may be a server, a gateway (Gateway, GW), a controller, or the like. The internet of things device may be a sensor, an electricity meter, a water meter, or the like. The internet of vehicles device may be a part of a locomotive (a vehicle or an electric vehicle); or a vehicle-mounted device, a vehicle-mounted terminal, an on board unit (On Board Unit, OBU), or the like that is placed or mounted on a vehicle.
(2) Embodiments of this application relate to an identifier (Identifier, ID) of UE and a relay UE identifier, for example, an identifier of UE 1, an identifier of UE 2, a first relay UE identifier, and a second relay UE identifier.
   The identifier of the UE or the relay UE identifier may be a permanent identifier or a temporary identifier of the UE. The permanent identifier of the UE may include any one or more of an international mobile subscriber identity (international mobile subscriber identity, IMSI), a subscription permanent identifier (subscription permanent identifier, SUPI), a subscription concealed identifier (Subscription Concealed Identifier, SUCI), or a generic public subscription ID (generic public subscription identifier, GPSI). The temporary identifier of the UE may include a globally unique temporary identity (globally unique temporary identity, GUTI). Alternatively, the relay UE identifier may be a relay identifier of relay UE, where the relay identifier may be a UE identifier of a relay service or a UE identifier of a ProSe. The identifier of the UE or the relay UE identifier may alternatively be another identifier that can uniquely represent the UE. This is not limited in this application.
(3) In descriptions of embodiments of this application, the term "and/or" describes an association relationship between associated objects and indicates that three relationships may exist. For example, A and/or B may indicate the following three cases: Only A exists, both A and B exist, and only B exists. The character "/" generally represents an "or" relationship between the associated objects. In this application, "at least one" means one or more, and "a plurality of' means two or more. In addition, it should be understood that, in descriptions of this application, terms such as "first" and "second" are merely used for distinguishing and description, but should not be understood as an indication or implication of relative importance, or an indication or implication of a sequence. The method provided in embodiments of this application may be applied to various communication systems, including but not limited to a 5G communication system and various future communication systems.

The following describes embodiments of this application with reference to the accompanying drawings in embodiments of this application. Terms used in embodiments of this application are only used to explain specific embodiments of this application, but are not intended to limit this application.

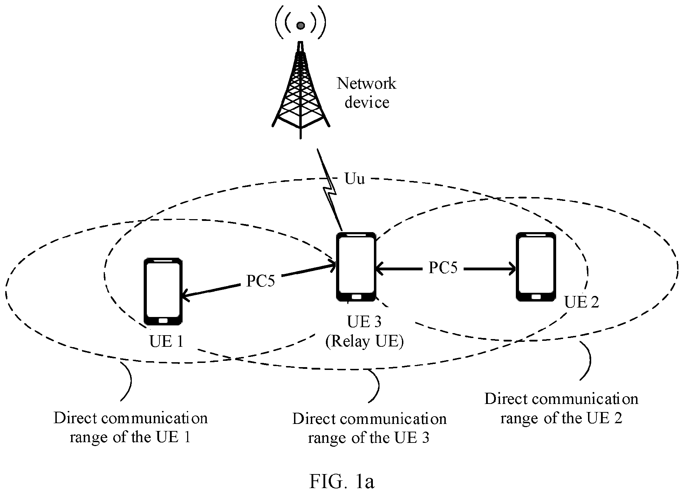

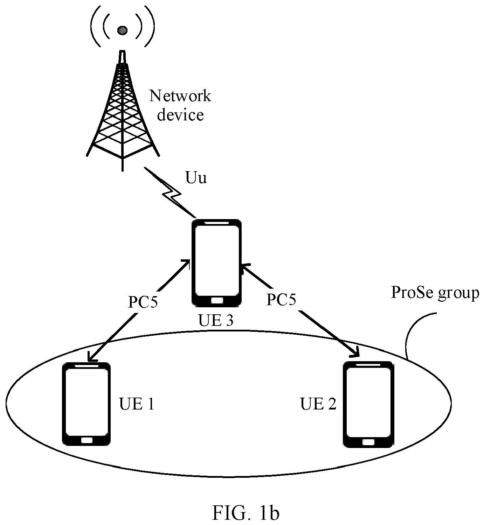

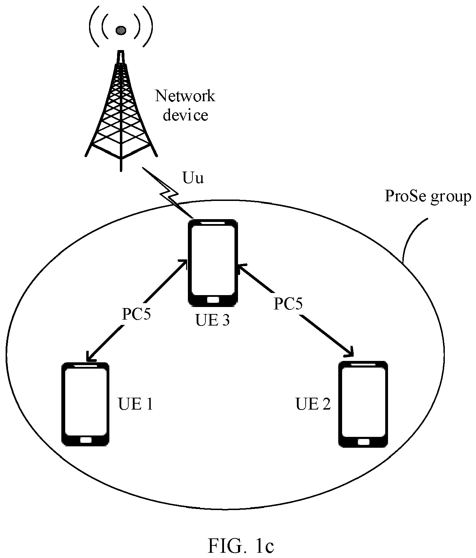

FIG. 1a, FIG. 1b, and FIG. 1c are schematic diagrams of three possible application scenarios to which embodiments of this application are applicable. Embodiments of this application are further applicable to another application scenario. This is not limited herein.

As shown in FIG. 1a, user equipment UE 3 is user equipment having a relay function, namely, relay UE. The UE 3 may be separately connected to user equipment UE 1 and user equipment UE 2 through a PC5 interface, and is connected to an operator network through a Uu interface. Direct communication may be performed between the UE 1 and the UE 3, and between the UE 2 and the UE 3. The UE 1 may communicate with the UE 2 through the UE 3 (relay UE). The UE 1 may be referred to as source user equipment (source UE), and the UE 2 may be referred to as target user equipment (target UE) or remote user equipment (remote UE). The UE 1 may also be referred to as an announcer (announcer) or a discoverer (discoverer), and the UE 2 may be referred to as a monitor (monitor) or a discoveree (discoveree). A communication manner used between the user equipments is not limited in embodiments of this application. For example, the communication manner may be a cellular communication technology, Wi-Fi, Bluetooth, or the like.

Embodiments of this application are further applicable to a group communication scenario. As shown in FIG. 1b, the UE 1 and the UE 2 belong to a same ProSe group. As shown in FIG. 1c, the UE 1, the UE 2, and the UE 3 belong to a same ProSe group. The ProSe group may alternatively be an ordinary group, which may be understood as that the UE 1, the UE 2, and the UE 3 belong to a same group or team, and members in the group or team share parameters such as a group identifier and a group key.

The scenarios described in FIG. 1a, FIG. 1b, and FIG. 1c may be internet of vehicles scenarios, that is, the UE 1, the UE 2, and the UE 3 are internet of vehicles devices. The foregoing scenarios may alternatively be scenarios such as public safety. This is not limited in this application.

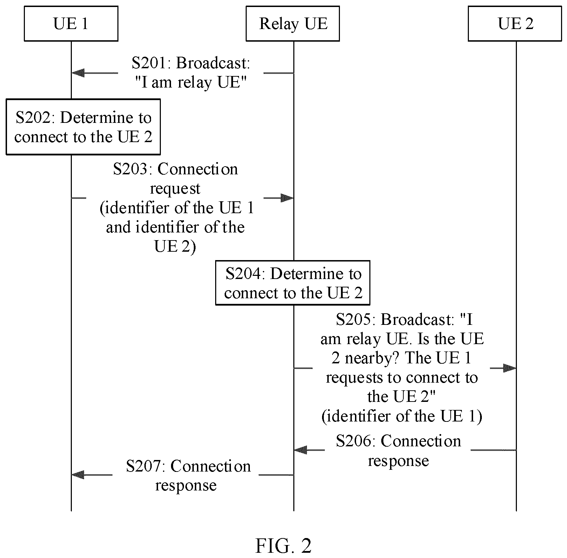

FIG. 2 shows a scenario in which UE 1 communicates with UE 2 through relay UE in a conventional technology.

S201: Relay UE publishes a broadcast message of "I am relay UE", to indicate that UE that receives the message can communicate with another UE through the relay UE.

S202: After receiving the message published by the relay UE, the UE 1 determines to connect to the UE 2 through the relay UE.

In another possible implementation, when finding that the UE 2 is not within a direct communication range, the UE 1 publishes "I am UE 1, looking for relay UE" through broadcast, and the relay UE responds to the UE 1 after receiving the broadcast message.

S203: The UE 1 sends a connection request message to the relay UE, and correspondingly, the relay UE receives the connection request message sent by the UE 1, where the connection request message carries an identifier of the UE 1 and an identifier of the UE 2.

S204: After receiving the connection request message sent by the UE 1, the relay UE determines to connect to the UE 2.

S205: The relay UE sends a connection request message to the UE 2, and correspondingly, the UE 2 receives the connection request message sent by the relay UE, where the connection request message carries the identifier of the UE 1.

In a possible implementation, the relay UE determines the UE 2 based on the identifier of the UE 2, and sends the connection request message to the UE 2.

In another possible implementation, the relay UE publishes a connection request message of "I am relay UE, and the UE 1 requests to connect to the UE 2" through broadcast.

S206: The UE 2 sends a connection response message to the relay UE, and correspondingly, the relay UE receives the connection response message sent by the UE 2.

After receiving the connection request message, if the UE 2 agrees to communicate with the UE 1, the UE 2 sends the connection response message to the relay UE.

S207: After receiving the connection response message, the relay UE sends a connection response message to the UE 1, and correspondingly, the UE 1 receives the connection response message sent by the relay UE.

In the foregoing procedure, the UE 1 may find the UE 2 through the relay UE, and establish communication with the UE 2. In a conventional technology, relay UE may send a message to target UE at any time and receive a response from the target UE. For example, in FIG. 2, the relay UE may send the connection request to the UE 2 when the relay UE receives no connection request of the UE 1. After receiving the connection request message, the UE 2 cannot determine whether the relay UE is authorized by the UE 1, and directly sends a connection response to the relay UE. For another example, in FIG. 2, after receiving the connection request message of the UE 1, the relay UE forwards the connection request message to another relay UE, so that the another relay UE may also call the UE 2 and receive a connection response of the UE 2. It can be learned that in the conventional technology, there is a risk that the relay UE maliciously calls the target UE. Therefore, how UE establishes secure communication with target UE through relay UE, and specifically, how the target UE verifies whether the relay UE is authorized is a technical problem that urgently needs to be resolved.

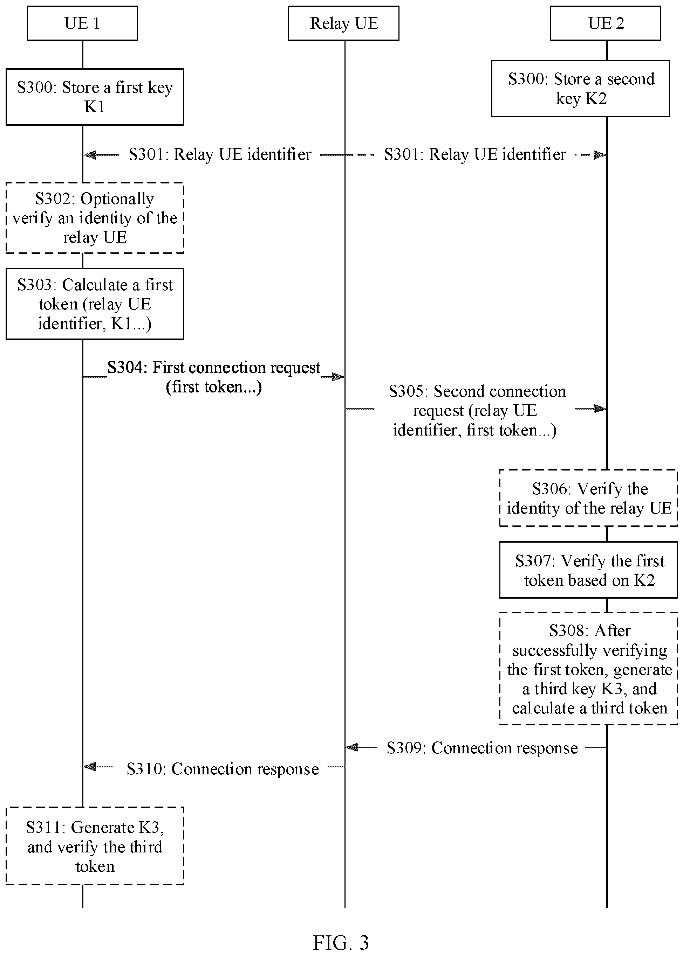

FIG. 3 is a schematic interaction diagram of relay user equipment (relay UE) verification according to an embodiment of this application. This embodiment is applicable to the scenario shown in FIG. 1a. In this embodiment, a relay UE identifier is bound in a connection request, so that UE 2 can verify whether relay UE is authorized.

S300: UE 1 stores a key K1, and the UE 2 stores a key K2.

Before the UE 1 determines to communicate with the UE 2 through the relay UE, the UE 1 stores the key K1, and the UE 2 stores the key K2.

In a possible implementation, the key K1 and the key K2 are symmetric keys. In this case, K1 is the same as K2. In another possible implementation, the key K1 is a private key of the UE 1, and the key K2 is a public key corresponding to the private key K1.

Optionally, the UE 1 and the UE 2 may further share a key identifier, and the key identifier is used to identify K1 and K2.

How the UE 1 and the UE 2 obtain K1, K2, and/or the key identifier is not limited in this application. For example, K1, K2, and the key identifier may be preset by using an application, may be distributed through an operator network, or may be pre-negotiated by the UE 1 and the UE 2.

S301: The relay UE sends, to the UE 1, a message that carries the relay UE identifier, and correspondingly, the UE 1 receives the message that carries the relay UE identifier and that is sent by the relay UE.

The message sent by the relay UE may further carry any one or more of a relay identity indication, a service identifier, an application identifier, or the key identifier, where the relay identity indication is used by UE having a relay function to indicate that the UE is relay UE.

In a possible implementation, the relay UE sends the foregoing message through broadcast or groupcast. When determining to communicate with the UE 2 through the relay UE, the UE 1 monitors whether there is the relay UE providing the relay function. Similarly, the UE 2 may also determine the relay UE identifier by monitoring a broadcast message sent by the relay UE.

In a possible implementation, the UE 1 obtains the relay UE identifier when or after establishing a secure connection to the relay UE, and the UE 2 may also obtain the relay UE identifier by using a same method.

In a possible implementation, the UE 1 sends a broadcast message to query whether there is relay UE nearby. When the relay UE responds to the request of the UE 1, the UE 1 obtains the relay UE identifier. How the UE 1 receives the message of the relay UE is not limited in this application.

S302: After receiving the message sent by the relay UE, the UE 1 may verify an identity of the relay UE.

In a possible implementation, the message sent by the relay UE may carry information about a digital signature. In this case, the UE 1 may verify the identity of the relay UE by verifying the information about the digital signature, to be specific, verify whether an identifier sent by the relay UE is an identifier of the relay UE. Specifically, the UE 1 queries, based on the relay UE identifier or an identifier of a network in which the relay UE is located, a public key corresponding to the relay UE, and verifies the digital signature by using the found public key of the relay UE, to verify the identity of the relay UE. The identifier of the network in which the relay UE is located may be an identifier of a tracking area (Tracking Area), a serving network, a home network, or the like. This is not limited in embodiments of this application.

If a verification result is that the verification succeeds, a subsequent step continues to be performed, that is, the UE 1 calculates a first token.

If the verification result is that the verification fails, the procedure is terminated.

S303: The UE 1 calculates the first token, where the first token is used to establish a connection to the UE 2 through the relay UE.

Specifically, that the UE 1 calculates the first token based on the key K1 and the relay UE identifier includes: The UE 1 generates the token by using the first key K1, the relay UE identifier, an identifier of the UE 1, an identifier of the UE 2, and a first fresh parameter as calculation parameters.

The first fresh parameter is used to identify freshness of the token, to prevent a replay attack. The first fresh parameter may be any one of a current time point, a counter, a sequence number, and a random number (a nonce or a RAND) selected by the UE 1. This is not limited in this application.

The calculation parameters used by the UE 1 to generate the first token may further include any one or more of the service identifier, the application identifier, the key identifier, or another parameter. This is not limited in this application.

The first token may be an integrity verification parameter, namely, a message authentication code (Message Authentication Code, MAC), generated based on the foregoing calculation parameters. A function for generating the MAC may be a hash-type function, an HMAC, or the like. This is not limited in this application. Alternatively, the first token may be a digital signature or another parameter used by the UE 2 for verification. This is not limited in this application.

In another possible implementation, the UE 1 encrypts the relay UE identifier by using the first key K1, to obtain the first token.

S304: The UE 1 sends a first connection request message to the relay UE, and correspondingly, the relay UE receives the first connection request message sent by the UE 1.

The first connection request message sent by the UE 1 to the relay UE carries the first token. The first connection request message further carries the identifier of the UE 1, the identifier of the UE 2, the first token, and the first fresh parameter.

In a possible implementation, if the UE 1 and the UE 2 share the first fresh parameter, or the first fresh parameter may be calculated based on a parameter shared by the UE 1 and the UE 2, the first connection request message may not carry the first fresh parameter.

The first connection request message sent by the UE 1 to the relay UE may further carry any one or more of the service identifier, the service identifier, the key identifier, or the another parameter. This is not limited in this application.

S305: After receiving the first connection request message sent by the UE 1, the relay UE determines the identifier of the UE 2, and sends a second connection request message to the UE 2. Correspondingly, the UE 2 receives the second connection request message sent by the relay UE.

The second connection request message sent by the relay UE carries the relay UE identifier and the first token. The second connection request message further carries the identifier of the UE 1, the identifier of the UE 2, and the optional first fresh parameter.

The second connection request message may further carry any one or more of the service identifier, the service identifier, the key identifier, or the another parameter. This is not limited in this application.

In a possible implementation, the relay UE publishes the second connection request message through broadcast, and the UE 2 obtains the second connection request message by monitoring a broadcast message sent by the relay UE.

In another possible implementation, when the relay UE has established a secure connection to the UE 2, the relay UE directly sends the second connection request message to the UE 2.

S306: After receiving the second connection request message sent by the relay UE, the UE 2 verifies the identity of the relay UE.

In a possible implementation, when the UE 2 receives the second connection request message sent by the relay UE, and does not establish the secure connection to the relay UE, the UE 2 verifies the identity of the relay UE.

In a possible implementation, the second connection request message sent by the relay UE carries the information about the digital signature. In this case, the UE 2 may verify the identity of the relay UE by verifying the information about the digital signature. For a specific verification method, refer to the descriptions of verifying the identity of the relay UE by the UE 1 in S302. Details are not described herein again.

In another possible implementation, the UE 2 stores the identifier of the relay UE (referred to as a second relay UE identifier below), and the UE 2 verifies whether the relay UE identifier in the second connection request message is the same as the second relay UE identifier stored in the UE 2.

The UE 2 stores the second relay UE identifier. Specifically, in a possible implementation, the UE 2 determines the second relay UE identifier before receiving the second connection request. In another possible implementation, the UE 2 determines the second relay UE identifier after receiving the second connection request. A manner of determining the second relay UE identifier by the UE 2 is not limited in this application. For example, the UE 2 may determine the second relay UE identifier by monitoring the broadcast message of the relay UE, determine the second relay UE identifier in a process in which the UE 2 establishes the secure connection to the relay UE, or obtain the second relay UE identifier after the UE 2 establishes the secure connection to the relay UE.

After successfully verifying the authorization of the relay UE, the UE 2 continues to perform subsequent steps. If the UE 2 fails to verify the identity of the relay UE, the UE 2 terminates the procedure.

S307: The UE 2 verifies the first token based on the second key K2.

First, the UE 2 finds, by using the identifier of the UE 1 and/or the key identifier that are/is carried in the second connection request message, the second key K2 corresponding to the first key K1.

The UE 2 verifies, based on K2, the first token carried in the second connection request message.

Specifically, in a possible implementation, when K2 is the symmetric key of K1, the UE 2 performs calculation by using the relay UE identifier and K2 as input parameters, to obtain a second token, and matches the first token with the generated second token, to obtain a verification result. In another possible implementation, when K2 is the public key corresponding to the private key K1, the UE 2 verifies the first token by using the relay UE identifier and K2, to obtain a verification result.

In another possible implementation, that the UE 2 verifies the first token by using K2 includes: decrypting the first token by using K2, and comparing the relay UE identifier in the first token with the relay UE identifier in the connection request, to obtain a verification result.

In another possible implementation, the UE 2 verifies the first token based on K2 and the second relay UE identifier stored in the UE 2. In this way, whether the relay UE identifier used by the UE 1 to calculate the first token is the same as the second relay identifier stored in the UE 2 may be verified.

After successfully verifying the first token, the UE 2 continues to perform subsequent steps.

If the UE 2 fails to verify the first token, it indicates that the relay UE is not authorized by the UE 1, and the UE 2 discards the received second connection request message, to terminate the procedure. In a possible implementation, the UE 2 sends a rejection message to the relay UE, so that the relay UE sends the rejection message to the UE 1. The rejection message may further carry a rejection reason, and the rejection reason is used to indicate that the verification on the first token fails or the relay UE identifier does not match the second relay UE identifier.

S308: After successfully verifying the first token, the UE 2 generates a third key K3, and calculates a third token.

In a possible implementation, after successfully verifying the first token, the UE 2 generates the third key K3, and uses K3 as an encryption key and/or an integrity protection key for communication between the UE 1 and the UE 2; or further derives an encryption key and/or an integrity key for communication between the UE 1 and the UE 2 based on K3. Specifically, when K2 is the symmetric key of K1, the UE 2 generates K3 based on K2. The UE 2 may alternatively generate K3 based on at least one of the relay UE identifier, the identifier of the UE 1, the identifier of the UE 2, the first fresh parameter, a second fresh parameter, an identifier of the second key, the service identifier, and the application identifier. The identifier of the second key is an identifier that is generated by the UE 2 and that is used to associate with K3.

In a possible implementation, after successfully verifying the first token, the UE 2 further calculates the third token. In a possible implementation, the UE 2 generates the third token by using K3 or K2, the relay UE identifier, the identifier of the UE 1, the identifier of the UE 2, and the second fresh parameter as calculation parameters.

It should be noted that the second fresh parameter is used to indicate freshness of the third token, to prevent the replay attack. The second fresh parameter may be any one of a current time point, a counter, a sequence number, and a random number (a nonce or a RAND) selected by the UE 1. Alternatively, the second fresh parameter may be the same as the first fresh parameter, or may be calculated based on the first fresh parameter. For example, when the first fresh parameter is the counter, the second fresh parameter may be a value obtained by adding n to the counter (where n is an integer). This is not limited in this application.

The calculation parameters used by the UE 2 to generate the third token may further include any one or more of the service identifier, the application identifier, the first fresh parameter, the identifier of the second key, or another parameter. This is not limited in this application.

S309: The UE 2 sends a connection response message to the relay UE, and correspondingly, the relay UE receives the connection response message sent by the UE 2.

The connection response message is used to indicate that the UE 2 successfully verifies the relay UE authorized by the UE 1.

In a possible implementation, the connection response message sent by the UE 2 to the relay UE carries the third token and the second fresh parameter. The connection response message may further carry any one or more of the first fresh parameter, the key identifier, the relay UE identifier, the identifier of the UE 1, and the identifier of the UE 2. This is not limited in this application.

S310: The relay UE sends the connection response message to the UE 1, and correspondingly, the UE 1 receives the connection response message sent by the relay UE.

After receiving the connection response message sent by the UE 2, the relay UE sends the connection response message to the UE 1.

S311: After receiving the connection response message, the UE 1 generates the key K3, and verifies the third token in the connection request message.

In a possible implementation, after receiving the connection response message, the UE 1 generates the key K3, and verifies the third token based on the generated key K3.

Specifically, when the key K2 is the symmetric key of the key K1, the UE 1 generates the key K3 based on K1. The UE 1 may alternatively generate K3 based on at least one of the relay UE identifier, the identifier of the UE 1, the identifier of the UE 2, the first fresh parameter, the second fresh parameter, the service identifier, and the application identifier. It should be noted that the input parameter used by the UE 1 to generate K3 needs to be the same as the input parameter used by the UE 2 to generate K3.

That the UE 1 verifies the third token based on the generated key K3 includes: The UE 1 performs calculation by using the key K3, the relay UE identifier, the identifier of the UE 1, the identifier of the UE 2, and the second fresh parameter as input parameters, to generate a token, and matches the generated token with the third token, to obtain a verification result.

After successfully verifying the third token, the UE 2 uses the key K3 as the encryption key and/or the integrity protection key for the communication between the UE 1 and the UE 2; or further derives the encryption key and/or the integrity key for the communication between the UE 1 and the UE 2 based on the key K3.

In another possible implementation, after receiving the connection response message, the UE 1 verifies the third token, and generates the key K3 after the verification succeeds.

Specifically, when the key K2 is the symmetric key of K1, that the UE 1 verifies the third token based on the key K1 includes: The UE 1 performs calculation by using the key K1, the relay UE identifier, the identifier of the UE 1, the identifier of the UE 2, and the second fresh parameter as input parameters, to generate a token, and verifies the third token by using the generated token.

After verifying the third token, the UE 1 generates the key K3, and uses the key K3 as the encryption key and/or the integrity protection key for the communication between the UE 1 and the UE 2; or further derives the encryption key and/or the integrity key for the communication between the UE 1 and the UE 2 based on the key K3. Specifically, the UE 2 generates the key K3 based on K1. The UE 2 may alternatively generate the key K3 based on at least one of the relay UE identifier, the identifier of the UE 1, the identifier of the UE 2, the first fresh parameter, the second fresh parameter, the service identifier, and the application identifier. It should be noted that the input parameter used by the UE 1 to generate K3 needs to be the same as the input parameter used by the UE 2 to generate K3.

In this embodiment, the UE 1 sends the connection request message to the UE 2 through the relay UE, where the connection request message carries the first token generated based on the relay UE identifier. After receiving the connection request message that is sent by the relay UE and that carries the first token and the relay UE identifier, the UE 2 verifies whether the relay identifier in the first token is the same as the relay UE identifier in the connection request, so that the relay UE is verified.

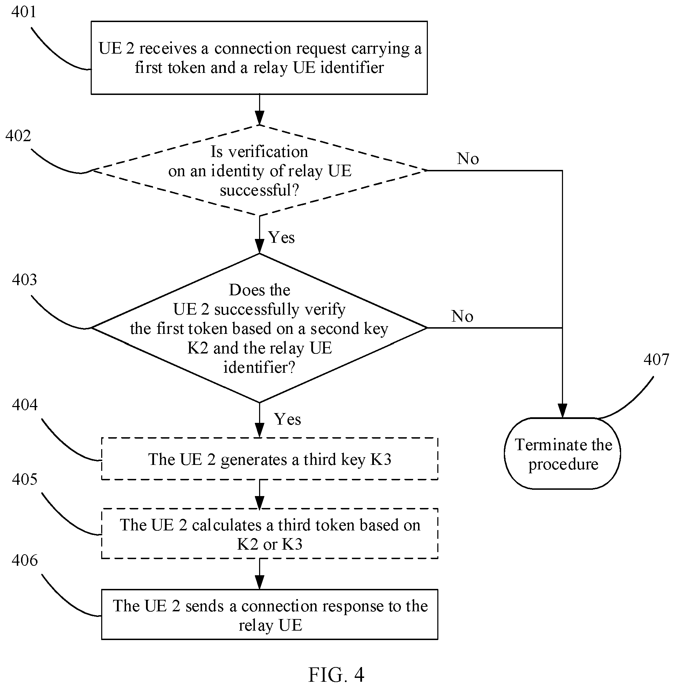

FIG. 4 is a flowchart of a relay UE verification method according to an embodiment of this application. This embodiment is applicable to the scenario shown in FIG. 1a. In this embodiment, target user equipment UE 2 is used as an execution body to describe a process in which the UE 2 verifies relay UE.

Step 401: The UE 2 receives a connection request carrying a first token and a first relay UE identifier.

The connection request further includes an identifier of UE 1, an identifier of the UE 2, and an optional first fresh parameter. For details, refer to the foregoing descriptions in S305. Details are not described herein again.

Step 402: Optionally, the UE 2 verifies an identity of the relay UE, and if the verification succeeds, the UE 2 continues to verify the first token (go to step 403); or if the verification fails, the UE 2 terminates the procedure (go to step 407).

The UE 2 may determine the identity of the relay UE by verifying a digital signature carried in the connection request message. The UE 2 may alternatively determine the identity of the relay UE based on a prestored relay UE identifier (a second relay identifier). For details, refer to the foregoing descriptions in S306. Details are not described herein again.

Step 403: The UE 2 verifies the first token based on a second key K2 and the first relay UE identifier, and may generate a third key K3 if the verification succeeds (go to step 404); or terminate the procedure if the verification fails (go to step 408).

The UE 2 stores the second key K2, and the UE 2 queries K2 based on the identifier of the UE 1 and/or the key identifier in the connection request message. In a possible implementation, the key K2 is a symmetric key of a key K1 stored in the UE 1, and the UE 2 performs calculation by using the first relay UE identifier and K3 as input parameters to obtain a token, and matches the generated token with the first token to obtain a verification result. In another possible implementation, the key K2 is a public key corresponding to a private key K1 stored in the UE 1, and the UE 1 verifies the first token by using the first relay UE identifier and K2, to obtain a verification result.

Step 404: The UE 2 generates the third key K3.

In a possible implementation, after successfully verifying the first token, the UE 2 may generate the third key K3, and uses K3 as an encryption key and/or an integrity protection key for communication between the UE 1 and the UE 2; or further derives an encryption key and/or an integrity key for communication between the UE 1 and the UE 2 based on K3.

Specifically, when K2 is the symmetric key of K1, the UE 2 generates the key K3 based on K2. The UE 2 may alternatively generate the key K3 based on at least one of the relay UE identifier, the identifier of the UE 1, the identifier of the UE 2, the first fresh parameter, a second fresh parameter, an identifier of the second key, a service identifier, and an application identifier. In a possible implementation, the UE 2 further generates the identifier of the second key, where the identifier of the second key is specifically used to associate with K3.

Step 405: The UE 2 calculates a third token based on K3 or K2.

In a possible implementation, the UE 2 generates the third token by using K2 or K3, the relay UE identifier, the identifier of the UE 1, the identifier of the UE 2, and the second fresh parameter as calculation parameters.

The calculation parameters used by the UE 2 to generate the third token may further include any one or more of the service identifier, the application identifier, the first fresh parameter, the identifier of the second key, or another parameter. This is not limited in this application.

Step 406: The UE 2 sends a connection response to the relay UE.

The connection response is used to indicate that the UE 2 successfully verifies the relay UE authorized by the UE 1.

In a possible implementation, the connection response sent by the UE 2 further includes the third token and the second fresh parameter. The connection response message may further include at least one of the first fresh parameter, the key identifier, the relay UE identifier, the identifier of the UE 1, and the identifier of the UE 2.

Step 407: Terminate the procedure.

When the UE 2 fails to verify the identity of the first relay UE or the UE 2 fails to verify the first token, the UE 2 discards the received connection request message, to terminate the communication establishment procedure. In a possible implementation, the UE 2 sends a rejection message to the relay UE, so that the relay UE sends the rejection message to the UE 1. The rejection message may further carry a rejection reason, and the rejection reason is used to indicate that the verification on the first token fails or the relay UE identifier does not match the second relay UE identifier.

In this embodiment, after receiving the connection request message that is sent by the relay UE and that carries the first token and the relay UE identifier, the UE 2 verifies, by using the stored second key K2, whether the relay identifier in the first token is the same as the relay UE identifier in the connection request, so as to verify the relay UE.

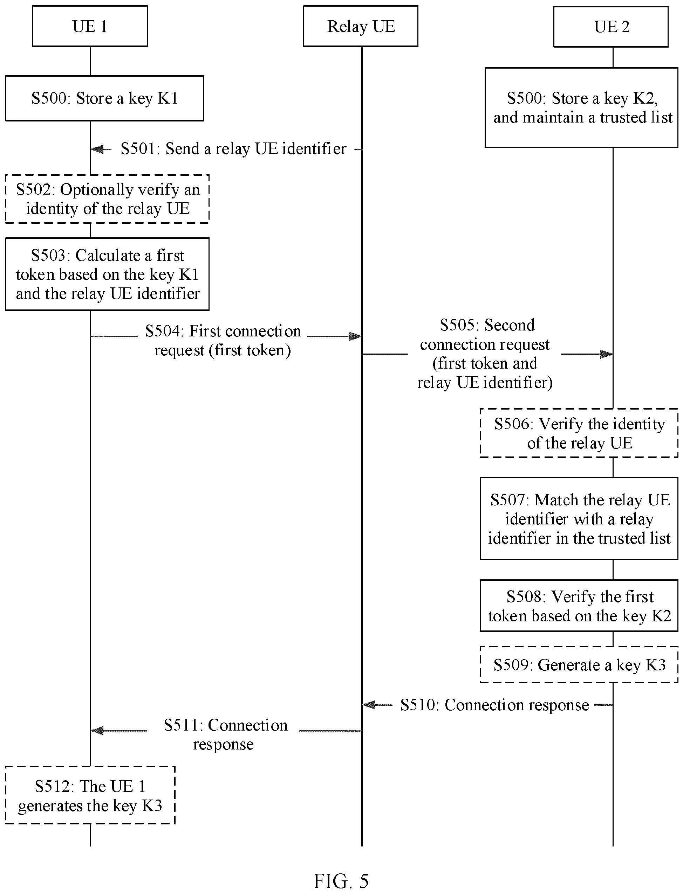

FIG. 5 is a schematic interaction diagram of relay UE verification according to an embodiment of this application. This embodiment is applicable to the scenario shown in FIG. 1a. In this embodiment, a relay UE identifier is bound in a connection request, so that UE 2 can verify whether relay UE is authorized. A difference between this embodiment and the embodiment described in FIG. 3 lies in that: The UE 2 maintains a trusted list. Before verifying a first token in the connection request message sent by the relay UE, the UE 2 determines whether the relay UE is in the trusted list. If determining that the relay UE is in the trusted list, the UE 2 does not need to verify the first token, so that communication establishment duration is shortened and efficiency is improved.

S500: UE 1 stores a first key K1, and the UE 2 stores a second key K2 and maintains the trusted list.

Before the UE 1 determines to communicate with the UE 2 through the relay UE, the UE 1 stores the first key K1, and the UE 2 stores the second key K2. K1 and K2 may be a pair of symmetric keys, or may be a pair of public and private keys. To be specific, K1 is a private key of the UE 1, and K2 is a public key corresponding to the private key K1. For details, refer to S300. Details are not described herein again.

In a possible implementation, the UE 2 further maintains the trusted list, where the trusted list includes a relay UE identifier, and relay UE indicated by the relay UE identifier is trusted by the UE 2. When receiving a message sent by the relay UE in the trusted list, the UE 2 does not need to further verify whether the relay UE is authorized.

In a possible implementation, the relay UE identifier included in the trusted list has time validity. For example, each relay UE identifier in the list has a timer, and the relay UE identifier is automatically deleted when the timer expires. Alternatively, each relay UE identifier has a validity period. When performing relay UE identifier matching, the UE 2 further determines whether the relay UE identifier in the list falls within the validity period. In addition, the UE 2 further needs to periodically delete an expired relay UE identifier. The time validity of the relay UE identifier may alternatively be implemented in another manner. This is not limited in this application.

The trusted list may be preset by using an application of the UE 2, or distributed through an operator network. The UE 2 may update the trusted list in a process of establishing a secure connection to the relay UE. Specifically, after successfully verifying the relay UE, the UE 2 adds an identifier of the relay UE to the trusted list.

Steps S501 to S506 are the same as steps S301 to S306. Details are not described herein again.

S507: The UE 2 determines whether the relay UE is in the trusted list.

After receiving the second connection request, and optionally verifying an identity of first relay UE, the UE 2 matches a relay UE identifier carried in the second connection request with the relay UE identifier in the trusted list maintained by the UE 2.

If the matching succeeds, it indicates that the relay UE is trusted by the UE 2, and the UE may skip a step of verifying a first token (namely, S508), and perform subsequent steps.

If the matching fails, it indicates that the relay UE is not trusted by the UE 2, and the UE needs to further verify the first token in the second connection request message, that is, perform S508. After successfully verifying the first token, the UE 2 updates the trusted list.

S508: The UE 2 verifies the first token based on the second key K2.

When the relay UE identifier is not in the trusted list maintained by the UE 2, the UE 2 further verifies the first token. Specifically, the UE 2 finds, by using the identifier of the UE 1 and/or the key identifier that are/is carried in the second connection request message, the second key K2 corresponding to the first key K1, and verifies, based on K2, the first token carried in the second connection request message. For specific content, refer to S307. Details are not described herein again.

After successfully verifying the first token, the UE 2 updates the trusted list, and continues to perform the subsequent step S509. That the UE 2 updates the trusted list is specifically that the UE 2 adds the identifier of the relay UE to the trusted list.

If the UE 2 fails to verify the first token, it indicates that the relay UE is not authorized by the UE 1, and the UE 2 discards the received second connection request message, to terminate the procedure.

S509: Optionally, the UE 2 generates a third key K3.

After successfully verifying the first token or successfully matching the relay UE identifier with the trusted list of the UE 2, the UE 2 may generate the third key K3, and uses K3 as an encryption key and/or an integrity protection key for communication between the UE 1 and the UE 2; or further derives an encryption key and/or an integrity key for communication between the UE 1 and the UE 2 based on K3. Specifically, when K2 is the symmetric key of K1, the UE 2 generates the key K3 based on K2. The UE 2 may alternatively generate the key K2 based on at least one of the relay UE identifier, the identifier of the UE 1, the identifier of the UE 2, the first fresh parameter, a second fresh parameter, an identifier of the second key, the service identifier, and the application identifier. The identifier of the second key is an identifier that is generated by the UE 2 and that is used to associate with K3 in a possible implementation.

In a possible implementation, after generating the key K3, the UE 2 performs, by using the key K3, encryption and/or integrity protection on a connection response message sent by the UE 2 to the relay UE.

In another possible implementation, after generating the key K3, the UE 2 further calculates a third token. For specific content, refer to the descriptions in S308. Details are not described herein again.

S510: The UE 2 sends the connection response message to the relay UE, and correspondingly, the relay UE receives the connection response message sent by the UE 2.

The connection response is used to indicate that the UE 2 successfully verifies the relay UE authorized by the UE 1.

In a possible implementation, the encryption and/or the integrity protection are/is performed on the connection response message by using the third key K3.

In another possible implementation, the connection response message carries the third token and the second fresh parameter. The connection response message may further carry any one or more of the first fresh parameter, the key identifier, the relay UE identifier, the identifier of the UE 1, the identifier of the UE 2, and the identifier of the second key. This is not limited in this application.

S511: After receiving the connection response message sent by the UE 2, the relay UE sends the connection response message to the UE 1, and correspondingly, the UE 1 receives the connection response message sent by the relay UE.

S512: After receiving the connection response message, the UE 1 generates the third key K3.

Specifically, when the second key K2 is the symmetric key of the first key K1, the UE 1 generates the key K3 based on K1. The UE 1 may alternatively generate the third key K3 based on at least one of the relay UE identifier, the identifier of the UE 1, the identifier of the UE 2, the first fresh parameter, the second fresh parameter, the identifier of the second key, the service identifier, and the application identifier. It should be noted that the input parameter used by the UE 1 to generate K3 needs to be the same as the input parameter used by the UE 2 to generate K3.

In a possible implementation, the UE 1 performs decryption and/or integrity verification on the connection response message by using the generated key K3.

In another possible implementation, the UE 1 verifies the third token in the connection response message. Specifically, after receiving the connection response message, the UE 1 generates the third key K3, and verifies the third token based on the generated K3; or after receiving the connection response message, the UE 1 verifies the third token based on the first key K1, and generates the key K3 after the verification succeeds. For specific content, refer to the descriptions in S311. Details are not described herein again.

In this embodiment, the UE 1 sends the connection request message to the UE 2 through the relay UE, where the connection request message carries the first token generated based on the relay UE identifier. After receiving the connection request message that is sent by the relay UE and that carries the first token and the relay UE identifier, the UE 2 determines whether the relay UE identifier matches the relay UE identifier in the trusted list of the UE 2, and if the matching fails, the UE 2 verifies whether the relay identifier in the first token is the same as the relay UE identifier in the connection request, so that the relay UE is verified.

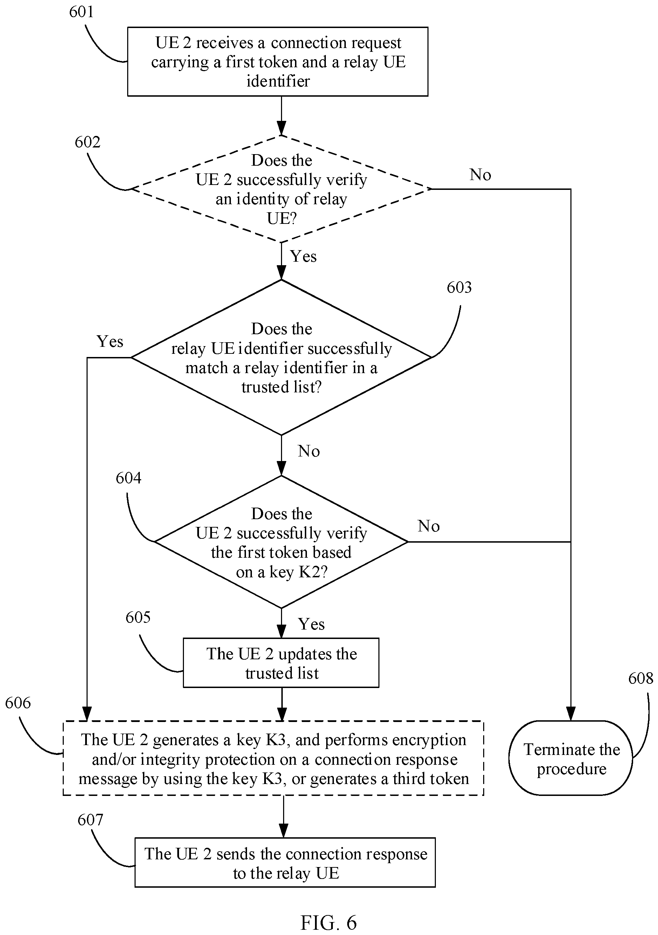

FIG. 6 is a flowchart of a relay UE verification method according to an embodiment of this application. This embodiment is applicable to the scenario shown in FIG. 1a. In this embodiment, UE 2 is used as an execution body to describe a process in which the UE 2 verifies relay UE.

Step 601: The UE 2 receives a connection request carrying a first token and a relay UE identifier.

The connection request further includes an identifier of UE 1, an identifier of the UE 2, and an optional first fresh parameter. For details, refer to the foregoing descriptions in S305. Details are not described herein again.

Step 602: Optionally, the UE 2 verifies an identity of the relay UE; and if the verification succeeds, the UE 2 continues to determine whether the relay UE identifier is in a trusted list of the UE 2 (go to step 603); or if the verification fails, the UE 2 terminates the procedure (go to step 608).

The UE 2 may determine the identity of the relay UE by verifying a digital signature carried in the connection request message. The UE 2 may alternatively determine an identity of first relay UE based on a prestored relay UE identifier (which is referred to as a second relay UE identifier below). For details, refer to the foregoing descriptions in S306. Details are not described herein again.

Step 603: The UE 2 determines whether the relay UE can match the trusted list of the UE 2, and if the matching succeeds, generates a third key K3 (go to step 606); or if the matching fails, verifies the first token (go to step 608).

The UE 2 maintains the trusted list, and the list includes an identifier of relay UE trusted by the UE 2 and optionally includes a validity period of each relay UE identifier. The trusted list may be preset by the UE 2, or distributed through an operator network. The UE 2 may update the trusted list in a process of establishing a secure connection to the relay UE.

The UE 2 matches the received relay UE identifier with the relay UE identifier in the trusted list. If the matching succeeds, it indicates that the relay UE is trusted by the UE 2, and the UE 2 does not need to verify the relay UE. If the matching fails, it indicates that the relay UE is not trusted by the UE 2, and the UE 2 needs to further verify the relay UE.

Step 604: When the relay UE identifier is not in the trusted list of the UE 2, the UE 2 verifies the first token based on a second key K2, and if the verification succeeds, the UE 2 updates the trusted list (605); or if the verification fails, the UE 2 terminates the procedure (go to step 608).

The UE 2 stores the second key K2, and the UE 2 queries K2 based on the identifier of the UE 1 and/or the key identifier in the connection request message. In a possible implementation, K2 is a symmetric key of a first key K1 stored in the UE 1. The UE 2 performs calculation by using the relay UE identifier and K2 as input parameters, to obtain a second token, and matches the generated second token with the first token, to obtain a verification result. In another possible implementation, K2 is a public key corresponding to a private key K1 stored in the UE 1, and the UE 1 verifies the first token by using the relay UE identifier and K3, to obtain a verification result.

Step 605: After successfully verifying the first token, the UE 2 updates the trusted list.

Specifically, the UE 2 adds the relay UE identifier to the trusted list. Optionally, the UE 2 further adds a validity period of the relay UE identifier to the trusted list.

Step 606: The UE 2 generates the third key K3.

In a possible implementation, after the relay UE identifier successfully matches the trusted list of the UE 2 or the UE 2 successfully verifies the first token, the UE may generate the third key K3, and uses K3 as an encryption key and/or an integrity protection key for communication between the UE 1 and the UE 2; or further derives an encryption key and/or an integrity key for communication between the UE 1 and the UE 2 based on K3.

After generating K3, the UE 2 performs, by using K3, encryption and/or integrity protection on a connection response message sent by the UE 2 to the relay UE, or further calculates a third token. For specific content, refer to S509. Details are not described herein again.

Step 607: The UE 2 sends the connection response message to the relay UE.

The connection response message is used to indicate that the UE 2 successfully verifies the relay UE authorized by the UE 1.

In a possible implementation, the encryption and/or the integrity protection are/is performed on the connection response message by using the third key K3.

In another possible implementation, the connection response message carries the third token and a second fresh parameter. The connection response message may further carry any one or more of the first fresh parameter, an identifier of the second key, the relay UE identifier, the identifier of the UE 1, and the identifier of the UE 2. This is not limited in this application.

Step 608: Terminate the procedure.

When the UE 2 fails to verify the identity of the relay UE or the UE 2 fails to verify the first token, the UE 2 discards the received connection request message, to terminate the communication establishment procedure. In a possible implementation, the UE 2 sends a rejection message to the relay UE, so that the relay UE sends the rejection message to the UE 1. The rejection message may further carry a rejection reason, and the rejection reason is used to indicate that the verification on the first token fails or the relay UE identifier does not match the second relay UE identifier.

In this embodiment, after receiving the connection request message that is sent by the relay UE and that carries the first token and the relay UE identifier, the UE 2 determines whether the relay UE identifier matches the relay UE identifier in the trusted list of the UE 2, and if the matching fails, the UE 2 verifies whether a relay identifier in the first token is the same as the relay UE identifier in the connection request, so that the relay UE is verified.

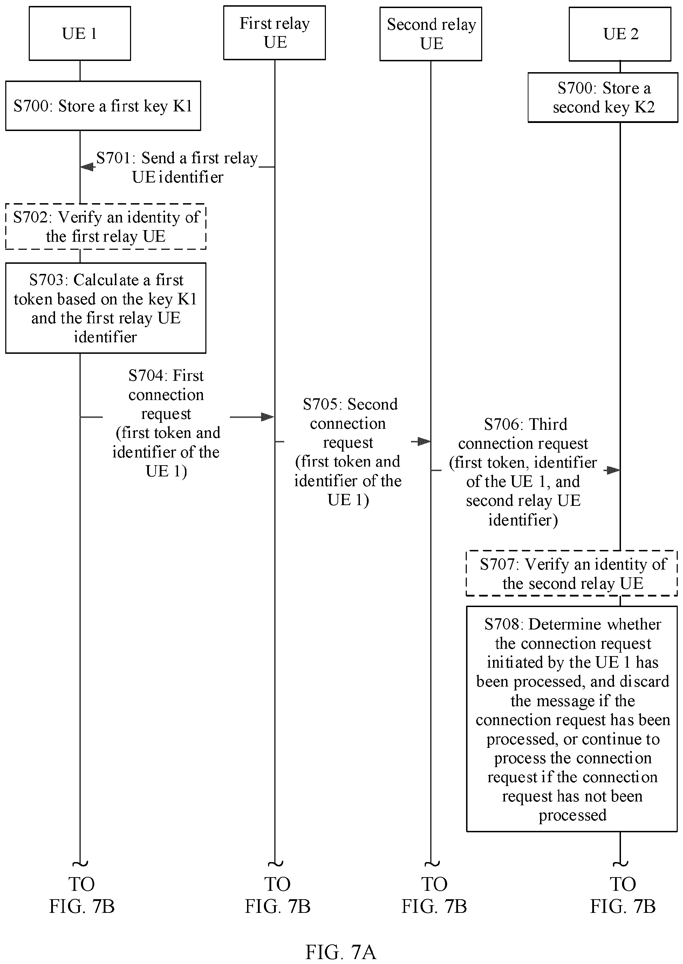

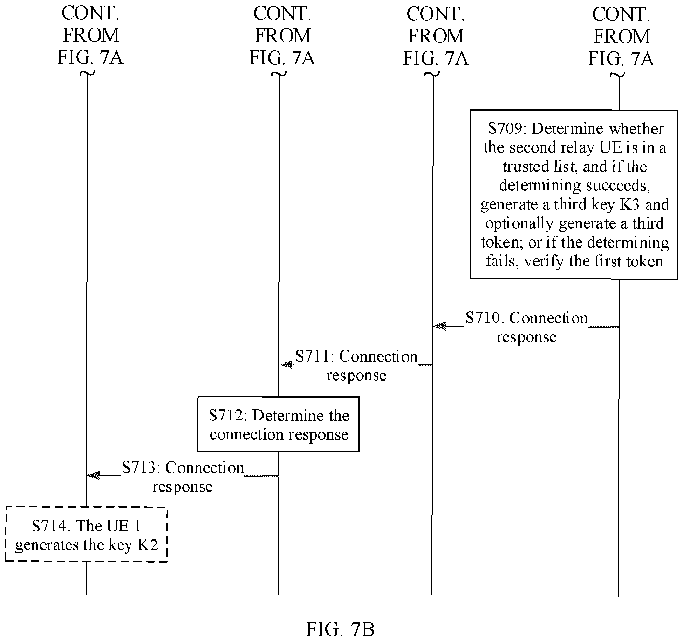

FIG. 7A and FIG. 7B are a schematic interaction diagram of relay UE verification according to an embodiment of this application. In this embodiment, a relay UE identifier is bound in a connection request, so that UE 2 can verify whether relay UE is authorized. This embodiment describes the schematic interaction diagram in which second relay UE sends the connection request to the UE 2 by using a first token generated based on a first relay UE identifier.

S700 to S704 are the same as S300 to S304 in FIG. 3. Details are not described herein again.

S705: After receiving a first connection request identifier sent by the UE 1, first relay UE sends a second connection request message through broadcast, and second relay UE receives the second connection request message through monitoring broadcasting.

The second connection request message sent by the first relay UE carries the identifier of the UE 1, the identifier of the UE 2, the first relay UE identifier, the first token, and the optional first fresh parameter.

The second connection request message may further carry any one or more of the service identifier, the service identifier, the key identifier, or the another parameter. This is not limited in this application.

S706. After receiving the second connection request sent by the first relay UE, second relay UE sends a third connection request to the UE 2, and correspondingly, the UE 2 receives the third connection request sent by the second relay UE.

The third connection request message sent by the second relay UE carries the identifier of the UE 1, the identifier of the UE 2, a second relay UE identifier, the first token, and the optional first fresh parameter.

The third connection request message may further carry any one or more of the service identifier, the service identifier, the key identifier, or the another parameter included in the second connection request. This is not limited in this application.

In a possible implementation, the second relay UE sends the third connection request message through broadcast, and the UE 2 obtains the third connection request message by monitoring a broadcast message sent by the second relay UE.

In another possible implementation, when the second relay UE has established a secure connection to the UE 2, the second relay UE directly sends the third connection request message to the UE 2.

S707: After receiving the third connection request message sent by the second relay UE, the UE 2 verifies an identity of the second relay UE.

Specific content is the same as that in S306 in which the UE 2 verifies the identity of the relay UE. Details are not described herein again.

After successfully verifying the identity of the relay UE, the UE 2 continues to perform subsequent steps. If the UE 2 fails to verify the identity of the relay UE, the UE 2 terminates the procedure.

S708: The UE 2 determines whether the UE 2 has processed the connection request initiated by the UE 1.

After successfully verifying the identity of the second relay UE, the UE 2 continues to determine whether the UE 2 has processed the connection request message initiated by the UE 1.

In a possible case, before receiving the third connection request message sent by the second relay UE, the UE 2 has processed the second connection request sent by the first relay UE. In this case, the UE 2 discards the third connection request message, to terminate the procedure.

If the UE 2 has not processed, before receiving the third connection request, the connection request initiated by the UE 1, the UE 2 continues to perform subsequent steps.

S709: The UE 2 determines whether the second relay UE is in a trusted list.

The UE 2 matches the second relay UE identifier with a relay identifier in the trusted list.

If the matching succeeds, it indicates that the first relay UE is trusted by the UE 2. In a possible implementation, the UE 2 generates a third key K3 and uses K3 as an encryption key and/or an integrity protection key for communication between the UE 1 and the UE 2; or further derives an encryption key and/or an integrity key for communication between the UE 1 and the UE 2 based on K3. Specifically, when K2 is the symmetric key of K1, the UE 2 generates K3 based on K2. The UE 2 may alternatively generate K3 based on at least one of the identifier of the UE 1, the identifier of the UE 2, the first fresh parameter, a second fresh parameter, an identifier of the second key, the service identifier, and the application identifier. The identifier of the second key is a key identifier that is generated by the UE 2 and that is used to associate with K3.

In a possible implementation, after generating the third key K3, the UE 2 performs, by using the key K3, encryption and/or integrity protection on a connection response message sent by the UE 2 to the second relay UE.

In another possible implementation, after generating the third key K3, the UE 2 further calculates a third token. Specifically, the UE 2 performs calculation by using the second key K2 or the third key K3, the first relay UE identifier, the identifier of the UE 1, the identifier of the UE 2, and the second fresh parameter as input parameters, to generate a second token. The calculation parameters used by the UE 2 to generate the second token may further include any one or more of the service identifier, the application identifier, the first fresh parameter, the identifier of the second key, or another parameter. This is not limited in this application.

If the matching fails, it indicates that the second relay UE is not trusted by the UE 2, and the UE needs to further verify a first token in the third connection request message.

Specifically, the UE 2 finds, by using the identifier of the UE 1 and/or the key identifier that are/is carried in the third connection request message, the second key K2 corresponding to the first key K1. The UE 2 verifies, based on K2 and the second relay UE identifier, the first token carried in the third connection request message. Because the first token is generated based on the key K1 and the first relay UE identifier, the UE 2 fails to verify the first token.

After failing to verify the first token, the UE 2 discards the third connection request message, to terminate the procedure.

S710: The UE 2 sends a connection response message to the second relay UE, and correspondingly, the second relay UE receives the connection response message sent by the UE 2.

In a possible implementation, the encryption and/or the integrity protection are/is performed on the connection response message by using the third key K3.

In another possible implementation, the connection response message carries the third token, the identifier of the UE 2, and the second fresh parameter. The connection response message may further carry any one or more of the first fresh parameter, the identifier of the second key, the identifier of the UE 1, the second relay UE identifier, and the first relay UE identifier. This is not limited in this application.

S711: After receiving the connection response message sent by the UE 2, the second relay UE sends the connection response message to the first relay UE, and correspondingly, the first relay UE receives the connection response message.

S712: After receiving the connection response message, the first relay UE determines the connection response message.

In a possible implementation, the first relay UE determines whether the connection response message that carries the identifier of the UE 2 is from the UE 2, and discards the message if the determining fails.

In another possible implementation, the first relay UE determines whether the first relay UE has processed the connection response message returned by the UE 2. If the first relay UE has processed the connection response message, the first relay UE discards the message. If the first relay UE has not processed the connection response message, the first relay UE sends the connection response message to the UE 1.

S713: The first relay UE sends the connection response message to the UE 1, and correspondingly, the UE 1 receives the connection response message sent by the first relay UE.

S714: After receiving the connection response message, the UE 1 generates the key K3.

For specific content, refer to S512. Details are not described herein again.

In this embodiment, the connection request message initiated by the UE 1 is sent to the UE 2 by using the first relay UE and the second relay UE. After receiving the connection request message, the UE 2 determines whether the UE 2 has processed the connection request initiated by the UE 1, to avoid repeated responses. After receiving the connection response initiated by the UE 2, the first relay UE determines whether the connection response is sent by the UE 2 or whether the first relay UE has processed the connection response initiated by the UE 2, to prevent the UE 1 from receiving repeated responses.

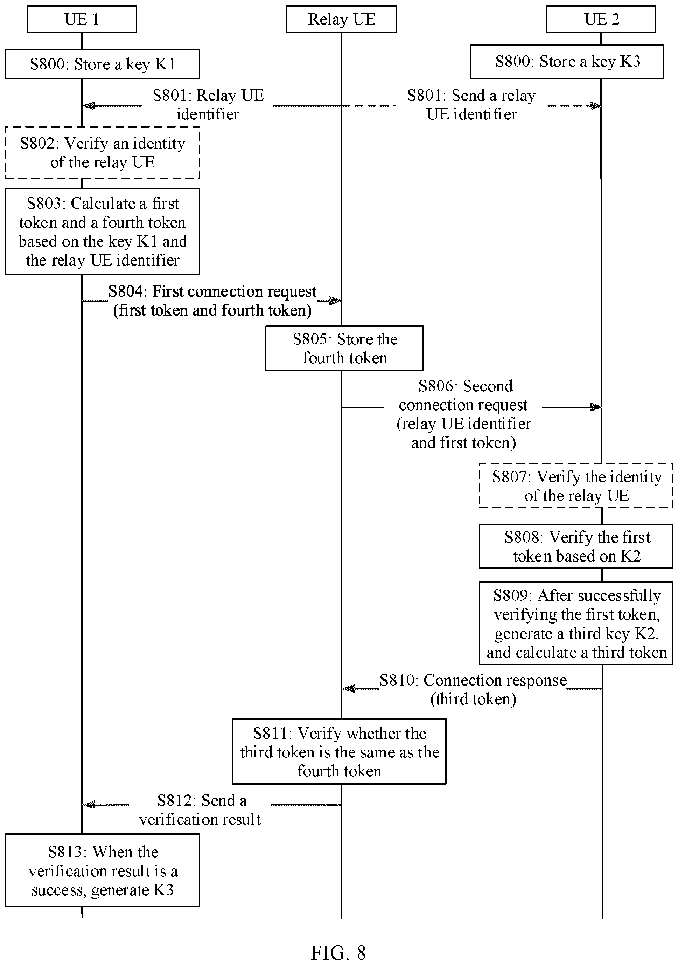

FIG. 8 is a schematic interaction diagram of relay UE verification according to an embodiment of this application. In the embodiment in FIG. 8, a relay UE identifier is bound in a connection request, so that UE 2 can verify whether relay UE is authorized. This embodiment is applicable to the scenario shown in FIG. 1a. A difference between this embodiment and the embodiment in FIG. 3 lies in that the relay UE verifies the third token sent by the UE 2, and directly terminates the procedure when the verification fails, so that signaling overheads are reduced and efficiency is improved.

S800: The UE 1 stores a first key K1, and the UE 2 stores a second key K2.

Before the UE 1 determines to communicate with the UE 2 through the relay UE, the UE 1 stores the first key K1, and the UE 2 stores the second key K2.

K1 and K2 are symmetric keys. Optionally, the UE 1 and the UE 2 may further share a key identifier, and the key identifier is used to identify K1 and K2.

How the UE 1 and the UE 2 obtain K1, K2, and/or the key identifier is not limited in this application. For example, K1, K2, and the key identifier may be preset by using an application, may be distributed through an operator network, or may be pre-negotiated by the UE 1 and the UE 2.

S801: The relay UE sends, to the UE 1, a message that carries a relay UE identifier, and correspondingly, the UE 1 receives the message that carries the relay UE identifier and that is sent by the relay UE.

Specific content is the same as that in S301. Details are not described herein again.

S802: Optionally, after receiving the message sent by the relay UE, the UE 1 verifies an identity of the relay UE.

Specific content is the same as that in S302. Details are not described herein again.

S803: The UE 1 calculates a first token and a fourth token.

Specifically, that the UE 1 calculates the first token and the fourth token based on the first key K1 and the relay UE identifier includes: The UE 1 generates the first token by using K1, the relay UE identifier, an identifier of the UE 1, an identifier of the UE 2, and a first fresh parameter as calculation parameters; and the UE 1 generates the fourth token by using K1, the relay UE identifier, the identifier of the UE 1, the identifier of the UE 2, and a second fresh parameter as calculation parameters.

The first fresh parameter and the second fresh parameter are used to identify freshness of the tokens, to prevent a replay attack. The first fresh parameter may be any one of a current time point, a counter, a sequence number, and a random number (a nonce or a RAND) selected by the UE 1. This is not limited in this application.

The calculation parameters used by the UE 1 to generate the first token or the fourth token may further include any one or more of a service identifier, an application identifier, the key identifier, or another parameter. This is not limited in this application.

S804: The UE 1 sends a first connection request message to the relay UE, and correspondingly, the relay UE receives the first connection request message sent by the UE 1.

The first connection request message sent by the UE 1 to the relay UE carries the identifier of the UE 1, the identifier of the UE 2, the first token, the fourth token, the first fresh parameter, and the second fresh parameter.

In a possible implementation, if the UE 1 and the UE 2 share the first fresh parameter and/or the second fresh parameter, or the first fresh parameter and/or the second fresh parameter may be calculated based on a parameter shared by the UE 1 and the UE 2, the first connection request message may not carry the first fresh parameter and/or the second fresh parameter.

The first connection request message sent by the UE 1 to the relay UE may further carry any one or more of the service identifier, the service identifier, the key identifier, or the another parameter. This is not limited in this application.

S805: The relay UE stores the fourth token.

After receiving the first connection request message sent by the UE 1, the relay UE stores the fourth token. The fourth token is used to verify a third token sent by the UE 2.

S806: After receiving the first connection request message sent by the UE 1, the relay UE determines the identifier of the UE 2, and sends a second connection request message to the UE 2. Correspondingly, the UE 2 receives the second connection request message sent by the relay UE.

The second connection request message sent by the relay UE carries the identifier of the UE 1, the identifier of the UE 2, the relay UE identifier, the first token, and the optional first fresh parameter and/or the optional second fresh parameter.

The second connection request message may further carry any one or more of the service identifier, the service identifier, the key identifier, or the another parameter. This is not limited in this application.

In a possible implementation, the relay UE sends the second connection request message through broadcast, and the UE 2 obtains the second connection request message by monitoring a broadcast message sent by the relay UE.

In another possible implementation, when the relay UE has established a secure connection to the UE 2, the relay UE directly sends the second connection request message to the UE 2.

S807: After receiving the second connection request message sent by the relay UE, the UE 2 verifies the identity of the relay UE.

Specific content is the same as that in S306. Details are not described herein again.

S808: The UE 2 verifies the first token based on the second key K2.

Specific content is the same as that in S307. Details are not described herein again.

S809: After successfully verifying the first token, the UE 2 generates a third key K3, and calculates the third token.

In a possible implementation, after successfully verifying the first token, the UE 2 generates the third key K3, and uses K3 as an encryption key and/or an integrity protection key for communication between the UE 1 and the UE 2; or further derives an encryption key and/or an integrity key for communication between the UE 1 and the UE 2.

Specifically, the UE 2 generates K3 based on K2. The UE 2 may alternatively generate K3 based on at least one of the relay UE identifier, the identifier of the UE 1, the identifier of the UE 2, the first fresh parameter, the second fresh parameter, an identifier of the second key, the service identifier, and the application identifier. The identifier of the second key is a key identifier that is generated by the UE 2 and that is used to associate with K3.

In a possible implementation, after successfully verifying the first token, the UE 2 further calculates the third token. Specifically, the UE 2 generates the third token by using K2, the relay UE identifier, the identifier of the UE 1, the identifier of the UE 2, and the second fresh parameter as calculation parameters.

Another calculation parameter used by the UE 2 to generate the third token may further include any one or more of the service identifier, the application identifier, the first fresh parameter, the identifier of the second key, or the another parameter. It should be noted that the another calculation parameter used by the UE 2 to generate the third token needs to be the same as another calculation parameter used by the UE 1 to generate the fourth token.

S810: The UE 2 sends a connection response message to the relay UE, and correspondingly, the relay UE receives the connection response message sent by the UE 2.

The connection response message sent by the UE 2 to the relay UE carries the third token. The connection response message may further carry any one or more of the second fresh parameter, the first fresh parameter, the identifier of the second key, the relay UE identifier, the identifier of the UE 1, and the identifier of the UE 2. This is not limited in this application.

S811: The relay UE verifies the third token in the connection response.

After receiving the connection response that carries the third token and that is sent by the UE 2, the relay UE verifies the third token. Specifically, the relay UE verifies whether the received third token is the same as the fourth token stored in the relay UE.

If the relay UE successfully verifies the third token, the relay UE sends a verification result to the UE 1.

If the relay UE fails to verify the third token, the relay UE terminates the communication establishment procedure.

S812: After successfully verifying the third token, the relay UE sends the verification result to the UE 1, and correspondingly, the UE 1 receives the verification result sent by the relay UE.

S813: After receiving the verification result sent by the relay UE, the UE 1 generates the third key K3.

Specifically, the UE 1 generates K3 based on K1. The UE 1 may alternatively generate the key K2 based on at least one of other parameters such as the relay UE identifier, the identifier of the UE 1, the identifier of the UE 2, the first fresh parameter, the second fresh parameter, the service identifier, and the application identifier. It should be noted that another parameter used by the UE 1 to generate K3 needs to be the same as another parameter used by UE 2 to generate K3.

The UE 1 uses the generated K3 as the encryption key and/or the integrity protection key for the communication between the UE 1 and the UE 2; or further derives the encryption key and/or the integrity key for the communication between the UE 1 and the UE 2 based on the key K2.

In this embodiment, when sending, to the UE 2 through the relay UE, the first token generated based on the relay UE identifier, the UE 1 further sends the fourth token to the relay UE, and the relay UE stores the fourth token. After successfully verifying the first token, the UE 2 sends the third token to the relay UE. The relay UE verifies the third token based on the stored fourth token, and sends the verification result to the UE 1, so that the relay UE is verified. It should be noted that, before verifying the first token, the UE 2 may further verify whether the relay UE is in a trusted list. If the verification succeeds, the step of verifying the first token may be skipped, and the third token is directly generated, so that communication establishment duration is shortened. For related descriptions of the trusted list, refer to the embodiment in FIG. 5. Details are not described herein again.

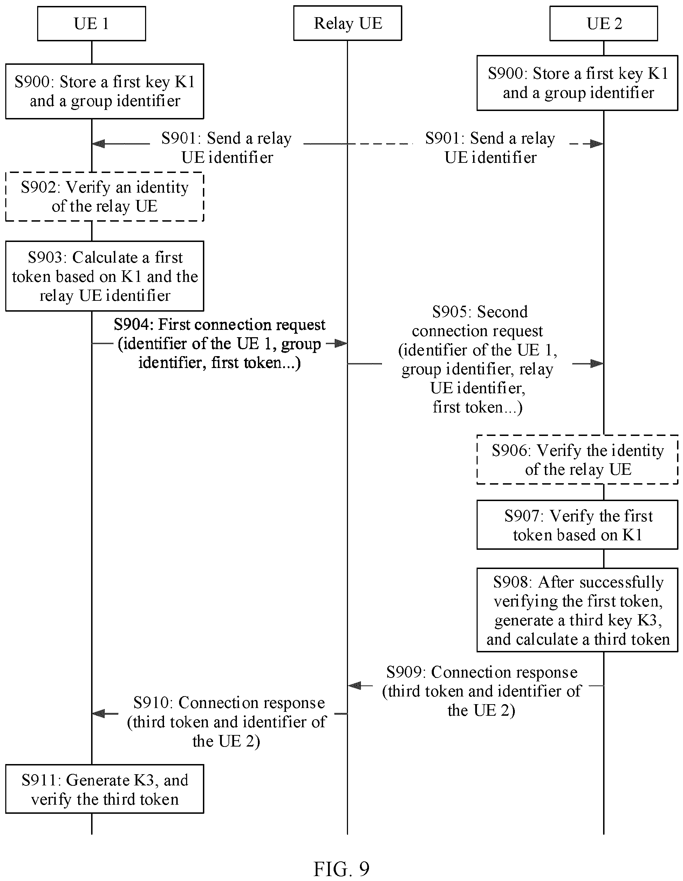

FIG. 9 is a schematic interaction diagram of relay UE verification according to an embodiment of this application. In this embodiment, a relay UE identifier is bound in a connection request sent by UE 1, so that UE 2 can verify whether relay UE is authorized by the UE 1. A difference between this embodiment and the embodiment in FIG. 3 lies in that, the UE 1 may discover the UE 2 based on a group identifier. This is applicable to the group communication scenario shown in FIG. 1b.

S900: The UE 1 and the UE 2 store a key K1 and a group identifier.

The UE 1 and the UE 2 belong to a same group, and store the group identifier of the group.

The UE 1 and the UE 2 further share the key K1, where K1 is a key of the group to which the UE 1 and the UE 2 belong.

The UE 1 and the UE 2 may further share a key identifier, and the key identifier is used to identify K1.

How the UE 1 and the UE 2 obtain K1, the group identifier, and/or the key identifier is not limited in this application. For example, the key K1, the group identifier, and/or the key identifier may be preset by using an application, may be distributed through an operator network, or may be pre-negotiated by the UE 1 and the UE 2.

S901: The relay UE sends, to the UE 1, a message that carries a relay UE identifier, and correspondingly, the UE 1 receives the message that carries the relay UE identifier and that is sent by the relay UE.

Specific content is the same as that in S301. Details are not described herein again.

S902: After receiving the message sent by the relay UE, the UE 1 may verify an identity of the relay UE.

Specific content is the same as that in S302. Details are not described herein again.

S903: The UE 1 calculates a first token, where the first token is used to establish a connection to a group member through the relay UE.

Specifically, that the UE 1 calculates the first token based on the first key K1 and the relay UE identifier includes: The UE 1 generates the first token by using K1, the relay UE identifier, an identifier of the UE 1, the group identifier, and a first fresh parameter as calculation parameters.

The first fresh parameter is used to identify freshness of the token, to prevent a replay attack. The first fresh parameter may be any one of a current time point, a counter, a sequence number, and a random number (a nonce or a RAND) selected by the UE 1. This is not limited in this application.

The calculation parameters used by the UE 1 to generate the first token may further include any one or more of a service identifier, an application identifier, the key identifier, or another parameter. This is not limited in this application.

The first token may be an integrity verification parameter MAC generated based on the foregoing calculation parameters. A function for generating the MAC may be a hash-type function, an HMAC, or the like. This is not limited in this application. Alternatively, the first token may be a digital signature or another parameter used by the UE 2 for verification. This is not limited in this application.

S904: The UE 1 sends a first connection request message to the relay UE, and correspondingly, the relay UE receives the first connection request message sent by the UE 1.

The first connection request message sent by the UE 1 to the relay UE carries the identifier of the UE 1, the group identifier, the first token, and the first fresh parameter.

In a possible implementation, if the UE 1 and the group member share the first fresh parameter, or the first fresh parameter may be calculated based on a parameter shared by the UE 1 and the group member, the first connection request message may not carry the first fresh parameter.

The first connection request message sent by the UE 1 to the relay UE may further carry any one or more of the service identifier, the service identifier, the key identifier, or the another parameter. This is not limited in this application.

S905: After receiving the first connection request message sent by the UE 1, the relay UE sends a second connection request message to the group member of the UE 1 based on the group identifier. Correspondingly, the group member receives the second connection request message sent by the relay UE.

The second connection request message sent by the relay UE carries the identifier of the UE 1, the group identifier, the relay UE identifier, the first token, and the optional first fresh parameter, where the relay UE identifier is an identifier of the relay UE. The second connection request message may further carry any one or more of the service identifier, the service identifier, the key identifier, or the another parameter. This is not limited in this application.

In a possible implementation, the relay UE sends the second connection request message through broadcast, and the group member UE 2 obtains the second connection request message by monitoring a broadcast message sent by the relay UE.

In another possible implementation, when the relay UE has established a secure connection to the UE 2, and has known the group identifier of the UE 2, the relay UE may directly send the second connection request message to the UE 2.

S906: After receiving the second connection request message sent by the relay UE, the UE 2 verifies the identity of the relay UE.

For specific content, refer to S306. Details are not described herein again.

S907: The UE 2 verifies the first token based on the key K1.

The UE 2 finds the first key K1 by using the identifier of the UE 1, the group identifier, and/or the key identifier that are/is carried in the second connection request, and verifies, based on the first key K1, the first token carried in the second connection request.

Specifically, the UE 2 performs calculation by using the relay UE identifier and K1 as input parameters, to obtain a second token, and matches the first token with the generated second token, to obtain a verification result.

If the UE 2 successfully verifies the first token, it indicates that the relay UE passes through the UE 1, and the UE 2 continues to perform subsequent steps.

If the UE 2 fails to verify the first token, it indicates that the relay UE is not authorized by the UE 1, and the UE 2 discards the received second connection request message, to terminate the procedure.

S908: After successfully verifying the first token, the UE 2 generates a third key K3, and calculates a third token.

In a possible implementation, after successfully verifying the first token, the UE 2 generates the third key K3, and uses K3 as an encryption key and/or an integrity protection key for communication between the UE 1 and the UE 2; or further derives an encryption key and/or an integrity key for communication between the UE 1 and the UE 2 based on K3. In another possible implementation, K3 may be used as a group communication key; or a group communication key is further derived based on a key K2.

Specifically, the UE 2 generates K3 based on K1. The UE 2 may alternatively generate K3 based on at least one of the relay UE identifier, the identifier of the UE 1, the group identifier, the identifier of the UE 2, the first fresh parameter, a second fresh parameter, the key identifier, the service identifier, and the application identifier.

In a possible implementation, after successfully verifying the first token, the UE 2 further calculates the third token.

In a possible implementation, the UE 2 generates the third token by using the third key K3, the relay UE identifier, the identifier of the UE 1, the identifier of the UE 2, the group identifier, and the second fresh parameter as calculation parameters.

In another possible implementation, the UE 2 generates the third token by using the key K1, the relay UE identifier, the identifier of the UE 1, the identifier of the UE 2, the group identifier, and the second fresh parameter as calculation parameters.

It should be noted that the second fresh parameter is used to indicate freshness of the third token, to prevent the replay attack.

The calculation parameters used by the UE 2 to generate the third token may further include any one or more of the service identifier, the application identifier, the key identifier, or the another parameter. This is not limited in this application.

S909: The UE 2 sends a connection response message to the relay UE, and correspondingly, the relay UE receives the connection response message sent by the UE 2.

The connection response message sent by the UE 2 to the relay UE carries the third token, the identifier of the UE 2, and the second fresh parameter. The connection response message may further carry any one or more of the first fresh parameter, the key identifier, the relay UE identifier, the identifier of the UE 1, and the group identifier. This is not limited in this application.

S910: The relay UE sends the connection response message to the UE 1, and correspondingly, the UE 1 receives the connection response message sent by the relay UE.

After receiving the connection response message sent by the UE 2, the relay UE sends the connection response message to the UE 1.

S911: After receiving the connection response message, the UE 1 generates the third key K3, and verifies the third token in the connection request message.

In a possible implementation, after receiving the connection response message, the UE 1 verifies the third token, and generates the third key K3 after the verification succeeds. Specifically, the UE 1 performs calculation by using the key K1, the relay UE identifier, the identifier of the UE 1, the identifier of the UE 2, the group identifier, and the second fresh parameter as input parameters, to generate a token, and matches the generated token with the third token, to obtain a verification result.

In another possible implementation, after receiving the connection response message, the UE 1 generates the third key K3, and verifies the third token based on the generated K3. Specifically, the UE 1 performs calculation by using K2, the relay UE identifier, the identifier of the UE 1, the identifier of the UE 2, the group identifier, and the second fresh parameter as input parameters to generate a token, and matches the generated token with the third token, to obtain a verification result.

The UE 1 generates K3. Specifically, the UE 1 generates K3 based on K1. The UE 1 may alternatively generate K3 based on at least one of other parameters such as the relay UE identifier, the identifier of the UE 1, the group identifier, the identifier of the UE 2, the first fresh parameter, the second fresh parameter, the key identifier, the service identifier, and the application identifier. It should be noted that another parameter used by the UE 1 to generate K3 needs to be the same as another parameter used by the UE 2 to generate K3.

In this embodiment, the UE 1 sends the connection request message to the group member through the relay UE, where the connection request message carries the first token generated based on the relay UE identifier. After the group member UE 2 receives the connection request message that is sent by the relay UE and that carries the first token and the relay UE identifier, the UE 2 verifies whether the relay identifier in the first token is the same as the relay UE identifier in the connection request. After successfully verifying the first token, the UE 2 calculates the communication key K3 and the third token, and sends the connection response.

It should be noted that before verifying the first token, the UE 2 may further verify whether the relay UE is in a trusted list. If the verification succeeds, the step of verifying the first token may be skipped, so that communication establishment duration is shortened. For details, refer to the embodiment in FIG. 5 or FIG. 6. Details are not described herein again.

It should be further noted that, after generating the third key K3, the UE 2 may further directly perform encryption and/or integrity protection on the connection response message by using K3. After receiving the connection response message, the UE 1 derives K3, and performs decryption and/or integrity verification on the connection response message based on the derived K3. For details, refer to the embodiment in FIG. 5. Details are not described herein again.

In addition, it should be further noted that the embodiment in FIG. 8 is also applicable to a process in which the UE 1 establishes the secure connection to the group member through the relay UE in this embodiment, to be specific, in this embodiment, the relay UE may also store a fourth token generated by the UE 1, and verify, based on the fourth token, the third token sent by the UE 2. Specific content is not described again.

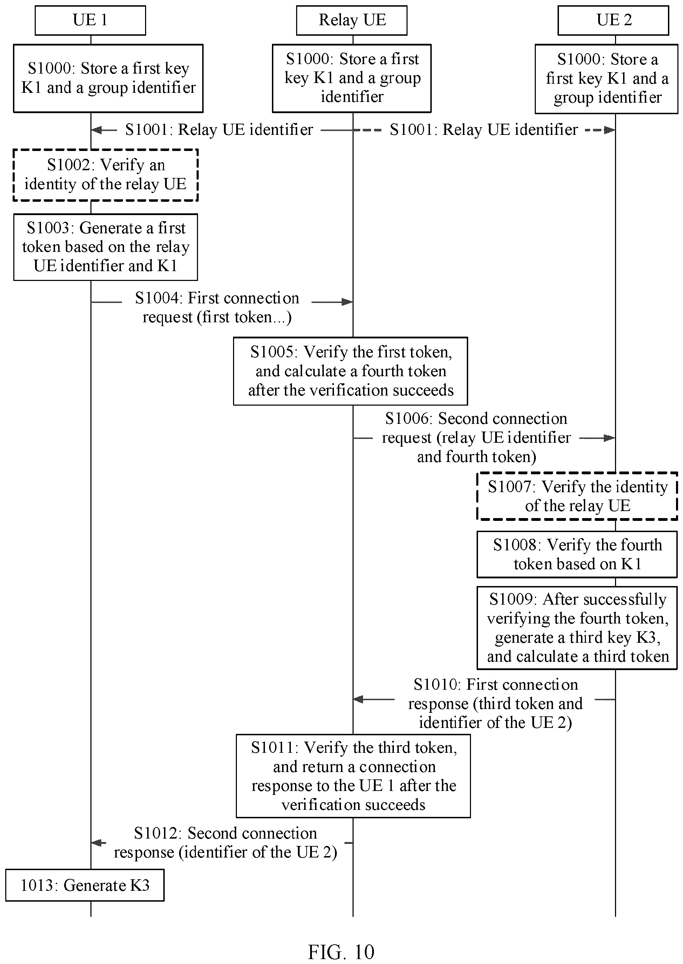

FIG. 10 is a schematic interaction diagram of searching based on a group member agent of relay UE according to an embodiment of this application. The embodiment shown in FIG. 10 is applicable to the scenario shown in FIG. 1c. To be specific, UE 1, relay UE, and UE 2 belong to a same group. In this embodiment, after receiving a connection request of the UE 1, the relay UE acts as an agent of the UE 1 to search for and verify the UE 2 or any group member, and sends a verification result and an identifier of the UE 2 or another group member to the UE 1, to discover a member in the group through the relay UE.

S1000: The UE 1, the UE 2, and the relay UE store a key K1 and a group identifier.

The UE 1, the UE 2, and the relay UE belong to the same group, and store the group identifier of the group. In addition to the UE 1, the UE 2, and the relay UE, the group may further include another group member, and the group member further stores the key K1 and an optional key identifier.

How the group member obtains the key K1, the group identifier, and/or the key identifier is not limited in this application. For example, the key K1, the group identifier, and/or the key identifier may be preset by using an application, may be distributed through an operator network, or may be pre-negotiated between group members.

S1001: The relay UE sends, to the UE 1, a message that carries a relay UE identifier, and correspondingly, the UE 1 receives the message that carries the relay UE identifier and that is sent by the relay UE.

Specific content is the same as that in S301. Details are not described herein again.

S1002: After receiving the message sent by the relay UE, the UE 1 may verify an identity of the relay UE.

Specific content is the same as that in S302. Details are not described herein again.

S1003: The UE 1 calculates a first token, where the first token is used to establish a connection to the group member through the relay UE.

Specifically, the UE 1 calculates the first token based on the first key K1 and the relay UE identifier.

In a possible implementation, the UE 1 discovers the UE 2 in the group through the relay UE. That the UE 1 calculates a first token includes: The UE 1 generates the token by using K1, the relay UE identifier, an identifier of the UE 1, an identifier of the UE 2, and a first fresh parameter as calculation parameters.

In another possible implementation, the UE 1 discovers any group member through the relay UE. That the UE 1 calculates a first token includes: The UE 1 generates the token by using K1, the relay UE identifier, an identifier of the UE 1, the group identifier, and a first fresh parameter as calculation parameters.

The first fresh parameter may be any one of a current time point, a counter, a sequence number, and a random number (a nonce or a RAND) selected by the UE 1. This is not limited in this application.

The calculation parameters used by the UE 1 to generate the first token may further include any one or more of a service identifier, an application identifier, the key identifier, or another parameter. This is not limited in this application.

The first token may be an integrity verification parameter, namely, a message authentication code MAC, generated based on the foregoing calculation parameters. A function for generating the MAC may be a hash-type function, an HMAC, or the like. This is not limited in this application. Alternatively, the first token may be a digital signature or another parameter used by the UE 2 for verification. This is not limited in this application.

S1004: The UE 1 sends a first connection request message to the relay UE, and correspondingly, the relay UE receives the first connection request message sent by the UE 1.

The first connection request message sent by the UE 1 to the relay UE carries the identifier of the UE 1, the identifier of the UE 2 or the group identifier, the first token, and the first fresh parameter.

In a possible implementation, if the UE 1 and the group member share the first fresh parameter, or the first fresh parameter may be calculated based on a parameter shared by the UE 1 and the group member, the first connection request message may not carry the first fresh parameter.

The first connection request message sent by the UE 1 to the relay UE may further carry any one or more of the service identifier, the service identifier, the key identifier, or the another parameter. This is not limited in this application.

S1005: After receiving the first connection request message, the relay UE verifies the first token in the first connection request message, and calculates a fourth token after the verification succeeds.

After receiving the first connection request message, the relay UE finds the key K1 based on the group identifier, the identifier of the UE 1, and/or the key identifier, performs calculation by using the key K1 and the relay UE identifier as input parameters, to obtain a token, and matches the first token with the generated token, to obtain a verification result. The input parameters for verifying the first token further include the identifier of the UE 1, the group identifier or the identifier of the UE 2, and the first fresh parameter. The input parameters for verifying the first token may further include any one or more of the service identifier, the application identifier, the key identifier, or the another parameter.

After successfully verifying the first token, the relay UE calculates the fourth token.

Input parameters used by the relay UE to calculate the fourth token are similar to the input parameters used by the UE 1 to calculate the first token, and a difference lies in that different fresh parameters are used. The input parameters used to calculate the fourth token include a fourth fresh parameter, and the fourth fresh parameter may be any one of a current time point, a counter, a sequence number, a random number (a nonce or a RAND) selected by the UE 1. This is not limited in this application.

S1006: After successfully verifying the first token, the relay UE sends a second connection request to the group member, and correspondingly, the group member receives the second connection request message sent by the relay UE.

The second connection request message sent by the relay UE carries the identifier of the UE 1, the group identifier or the identifier of the UE 2, the relay UE identifier, the fourth token, and the optional fourth fresh parameter, where the relay UE identifier is an identifier of the relay UE. The second connection request message may further carry any one or more of the service identifier, the service identifier, the key identifier, or the another parameter. This is not limited in this application.

In a possible implementation, the relay UE sends the second connection request message through broadcast, and the group member UE 2 obtains the second connection request message by monitoring a broadcast message sent by the relay UE.

In another possible implementation, when the relay UE has established a secure connection to the UE 2, and has known the group identifier of the UE 2, the relay UE may directly send the second connection request message to the UE 2.

S1007: After receiving the second connection request message sent by the relay UE, the UE 2 verifies the identity of the relay UE.

For specific content, refer to S306. Details are not described herein again.

S1008: The UE 2 verifies the fourth token based on the first key K1.

The UE 2 finds the first key K1 by using the group identifier carried in the second connection request, and verifies, based on K1, the fourth token carried in the second connection request.

Specifically, the UE 2 performs calculation by using the relay UE identifier and K1 as input parameters to obtain a token, and matches the fourth token with the generated token to obtain a verification result. The input parameters for verifying the fourth token further include the identifier of the UE 1, the group identifier or the identifier of the UE 2, and the fourth fresh parameter. The input parameters for verifying the first token may further include any one or more of the service identifier, the application identifier, the key identifier, or the another parameter.

S1009: After successfully verifying the fourth token, the UE 2 generates a third key K3, and calculates a third token.

This step is the same as S908 in which the UE 2 generates K3 and calculates the third token after successfully verifying the first token. Details are not described herein again.

S1010: The UE 2 sends a first connection response message to the relay UE, and correspondingly, the relay UE receives the first connection response message sent by the UE 2.

The connection response message sent by the UE 2 to the relay UE carries the third token, the identifier of the UE 2, and a second fresh parameter. The connection response message may further carry any one or more of the fourth fresh parameter, the key identifier, the relay UE identifier, the identifier of the UE 1, and the group identifier. This is not limited in this application.

S1011: The relay UE verifies the third token in the first connection response.

After receiving the connection response that carries the third token and that is sent by the UE 2, the relay UE verifies the third token. Specific content is the same as that in S911 in which the UE 1 verifies the third token. Details are not described herein again.

If the relay UE successfully verifies the third token, the relay UE sends a second connection response message to the UE 1.

If the relay UE fails to verify the third token, the relay UE terminates the communication establishment procedure.

S1012: The relay UE sends the second connection response message to the UE 1 after successfully verifying the third token, and correspondingly, the UE 1 receives the second connection response message sent by the relay UE.

The second connection response message carries the identifier of the UE 2 and the second fresh parameter. The second connection response message may further carry any one or more of the key identifier, the relay UE identifier, the identifier of the UE 1, and the group identifier. This is not limited in this application.

S1013: After receiving the second connection response message sent by the relay UE, the UE 1 generates the third key K3.

Specifically, the UE 1 generates K3 based on K1. The UE 1 may alternatively generate K3 based on at least one of other parameters such as the relay UE identifier, the identifier of the UE 1, the identifier of the UE 2, the first fresh parameter, the second fresh parameter, the service identifier, and the application identifier. It should be noted that another parameter used by the UE 1 to generate K3 needs to be the same as another parameter used by the UE 2 to generate K3.

The UE 1 uses the generated K3 as an encryption key and/or an integrity protection key for communication between the UE 1 and the UE 2; or further derives an encryption key and/or an integrity key for communication between the UE 1 and the UE 2 based on K3.

In this embodiment, the UE sends the first connection request message to the relay UE, where the first connection request message carries the first token generated based on the relay UE identifier. After successfully verifying the first token, the relay UE generates the fourth token, and sends the second connection request message carrying the fourth token to the group member. After successfully verifying the fourth token, the group member UE 2 calculates the communication key K3 and the third token, and returns, to the relay UE, the connection response carrying the third token. After successfully verifying the third token, the relay UE sends, to the UE 1, the connection response carrying the identifier of the UE 2, so that the relay UE acts as the agent of the UE 1 to search for and verify the group member.

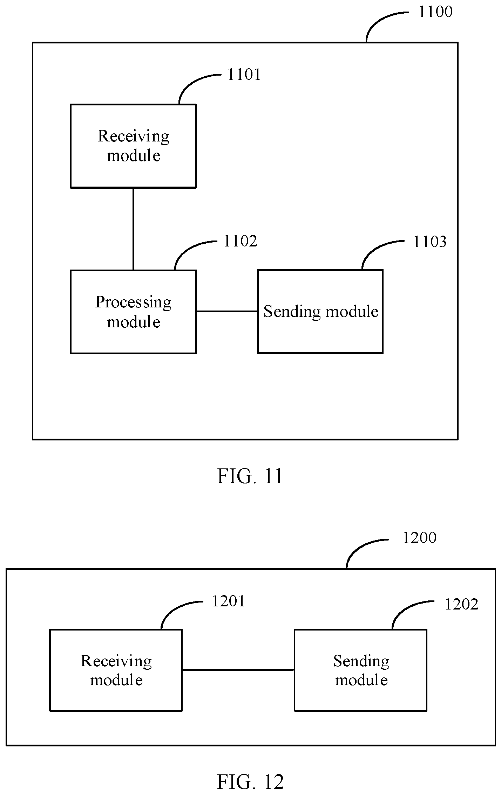

Refer to FIG. 11. An embodiment of this application provides an apparatus 1100. The apparatus includes a receiving module 1101, a processing module 1102, and a sending module 1103.

The apparatus 1100 may be used for UE 1, or may be the UE 1. The apparatus may perform the operations performed by the UE 1 in the foregoing method embodiments. The relay UE verification method in FIG. 3 is used as an example. The receiving module 1101 is configured to receive a relay UE identifier sent by relay UE, and is further configured to receive a connection response message sent by the relay UE. The processing module 1102 is configured to verify an identity of the relay UE, and is further configured to calculate a first token. The sending module 1103 is configured to send a first connection request message to the relay UE, where the connection request message carries the first token calculated by the processing module 1102.

The apparatus 1100 may be used for relay UE, or may be the relay UE. The apparatus may perform the operations performed by the relay UE in the foregoing method embodiments. The relay UE verification method in FIG. 8 is used as an example. The receiving module 1101 is configured to receive a first connection request message sent by UE 1, where the connection request message carries a first token. The processing module 1102 is configured to store a fourth token. The sending module 1103 is configured to send a second connection request message to UE 2, where the connection request message carries the first token and a relay UE identifier. The receiving module 1101 is further configured to receive a connection response message sent by the UE 2, where the connection response message carries a third token. After the receiving module 1101 receives the connection response message, the processing module 1102 is further configured to verify the third token in the connection response message based on the stored fourth token. After the processing module 1102 successfully verifies the fourth token, the sending module 1103 is further configured to send a verification result to the UE 1.

The apparatus 1100 may be used for UE 2, or may be the UE 2. The apparatus may perform the operations performed by the UE 2 in the foregoing method embodiments. The relay UE verification method in FIG. 5 is used as an example. The receiving module 1101 is configured to receive a second connection request message sent by relay UE, where the connection request message carries a first token and a relay UE identifier. The processing module 1102 is configured to store a second key K2, may be further configured to maintain a trusted list, may be further configured to verify an identity of the relay UE, is further configured to verify whether the relay UE is in the trusted list, is further configured to verify the first token based on K2, is optionally further configured to generate a third key K3, and may be further configured to perform encryption and/or integrity protection on a connection response message by using K3, or generate a third token. The sending module 1103 is configured to send the connection response to the first relay UE.

Refer to FIG. 12. An embodiment of this application provides an apparatus 1200. The apparatus includes a receiving module 1201 and a sending module 1202.

The apparatus 1200 may be used for second relay UE, or may be the second relay UE. The apparatus may perform the operations performed by the second relay UE in FIG. 7A and FIG. 7B. The receiving module 1201 is configured to receive a second connection request message sent by first relay UE, where the connection request message carries a first token. The sending module 1202 is configured to send a third connection request message to UE 2, where the connection request message carries the first token and a second relay UE identifier. The receiving module 1201 is further configured to receive a connection response message sent by the UE 2. After the receiving module 1201 receives the connection response message, the sending module 1202 is further configured to send the connection response message to the first relay UE.

The apparatus 1200 may be used for relay UE, or may be the relay UE. The apparatus may perform the operations performed by the relay UE in the method embodiments shown in FIG. 3, FIG. 5, and FIG. 9. The relay UE verification method in FIG. 3 is used as an example. The receiving module 1201 is configured to receive a first connection request message sent by UE 1, where the connection request message carries a first token. The sending module 1202 is configured to send a second connection request message to UE 2, where the connection request message carries the first token and a relay UE identifier. The receiving module 1201 is further configured to receive a connection response message sent by the UE 2. After the receiving module 1201 receives the connection response message, the sending module 1202 is further configured to send the connection response message to the UE 1.

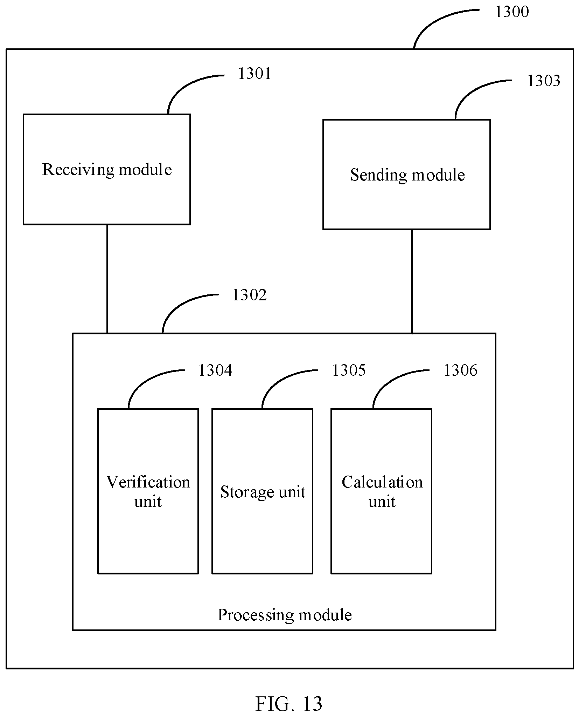

Refer to FIG. 13. An embodiment of this application provides an apparatus 1300. The apparatus includes a receiving module 1301, a processing module 1302, and a sending module 1303. The processing module 1302 further includes a verification unit 1304, a storage unit 1305, and a calculation unit 1306.

The apparatus 1300 may be used for UE 1, or may be the UE 1. The apparatus may perform the operations performed by the UE 1 in the foregoing method embodiments. The relay UE verification method in FIG. 3 is used as an example. The receiving module 1301 is configured to receive a relay UE identifier sent by relay UE. The storage unit 1305 in the processing module 1302 is configured to store parameters such as a key K1, an identifier of the UE 1, and an identifier of UE 2, and is further configured to store the relay UE identifier received by the receiving module 1301. The verification unit 1304 in the processing module 1302 may be configured to verify an identity of the relay UE. The calculation unit 1306 in the processing module 1302 is configured to calculate a first token based on the relay UE identifier. The sending module 1303 is configured to send a first connection request message to the relay UE, where the connection request message carries the first token calculated by the calculation unit 1306. The receiving module 1301 is further configured to receive a connection response message sent by the relay UE, where the connection response message carries a second token. After the receiving module 1301 receives the connection response message, the calculation unit 1306 is further configured to calculate a third key K3, and the verification unit 1304 is further configured to verify a third token.

The apparatus 1300 may be used for UE 2, or may be the UE 2. The apparatus may perform the operations performed by the UE 2 in the foregoing method embodiments. The relay UE verification method in FIG. 5 is used as an example. The receiving module 1301 is configured to receive a second connection request message sent by relay UE, where the connection request message carries a first token and a relay UE identifier. The storage unit 1305 in the processing module 1302 is configured to store a second key K2, and may be further configured to maintain a trusted list. The verification unit 1304 in the processing module 1302 may be configured to verify an identity of the relay UE, further configured to verify whether the relay UE is in the trusted list in the storage unit 1305, and further configured to verify the first token based on the second key K2 in the storage unit 1305. Optionally, the calculation unit 1306 in the processing module 1302 is further configured to generate a third key K3, may be further configured to perform encryption and/or integrity protection on a connection response message by using K3, and may be further configured to generate a second token. The sending module 1303 is configured to send the connection response to the first relay UE. Optionally, encryption and/or integrity protection are/is performed on the connection response message by using the third key K3, or optionally, the connection response message carries the second token.

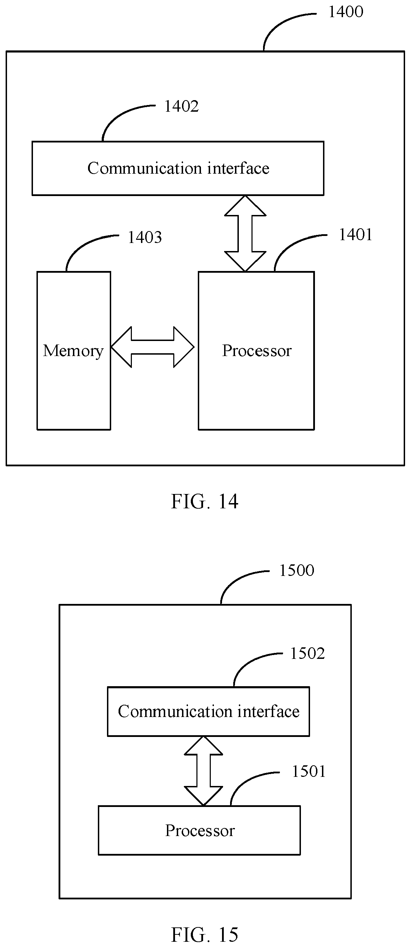

Refer to FIG. 14. An embodiment of this application further provides a device 1400. The device 1400 includes a processor 1401, a communication interface 1402, and a memory 1403.

The processor 1401 is configured to execute program instructions. When a program is executed, the processor 1401 is enabled to perform the operations performed by the UE 1, the UE 2, the relay UE, the first relay UE, and the second relay UE in the methods provided in the foregoing embodiments. The processor 1401 may be but is not limited to a central processing unit (central processing unit, CPU), a network processor (network processor, NP), or a combination of a CPU and an NP. When the processor 1401 is the CPU, the CPU may be a single-core CPU or may be a multi-core CPU.

The processor 1401 may further include a hardware chip. The hardware chip may be an application-specific integrated circuit (Application-Specific Integrated Circuit, ASIC), a programmable logic device (Programmable Logic Device, PLD), or a combination thereof. The PLD may be a complex programmable logic device (Complex Programmable Logic Device, CPLD), a field-programmable gate array (Field-Programmable Gate Array, FPGA), a generic array logic (Generic Array Logic, GAL), or any combination thereof.

The communication interface 1402 is configured to communicate with another device under control of the processor 1401, for example, send data and/or receive data. The sending module 1103 and the receiving module 1101 in FIG. 11, the sending module 1203 and the receiving module 1201 in FIG. 12, and the sending module 1303 and the receiving module 1301 in FIG. 13 may all be implemented by using the communication interface 1402.

The memory 1403 is configured to store the program executed by the processor 1401. The memory 1403 may include but is not limited to a random access memory (Random Access Memory, RAM), a read-only memory (Read-Only Memory, ROM), an erasable programmable read-only memory (Erasable Programmable Read-Only Memory, EPROM), a portable read-only memory (Compact Disc Read-Only Memory, CD-ROM), a flash memory (flash memory), a hard disk drive (hard disk drive, HDD), or a solid-state drive (solid-state drive, SSD). The memory 1403 may further include any combination of the foregoing types of memories.

Refer to FIG. 15. An embodiment of this application provides a communication device 1500. The device includes a communication interface 1502 configured to receive and send data, and a processor 1501 coupled to the communication interface. The processor 1501 performs the methods provided in the foregoing embodiments, and the processor 1501 further performs, through the communication interface 1502, data receiving and sending in the foregoing embodiment.

An embodiment of this application provides a computer-readable storage medium. The medium stores a computer program, and the computer program includes instructions for performing the method provided in the foregoing embodiment.

An embodiment of this application provides a computer program product including instructions. When the computer program product runs on a computer, the computer is enabled to perform the method provided in the foregoing embodiment.

A person skilled in the art should understand that embodiments of this application may be provided as a method, an apparatus, a device (system), or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the apparatus, the device (system), and the computer program product according to embodiments of this application. It should be understood that each procedure in the flowcharts may be implemented by using computer program instructions. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can guide the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

The foregoing descriptions are merely some specific implementations of this application, but are not intended to limit the protection scope of this application. Within the technical scope disclosed in this application, any person skilled in the art may make changes and modifications to these embodiments. Therefore, the following claims are intended to be construed as to cover the foregoing embodiments and all changes and modifications falling within the scope of this application. Therefore, the protection scope of this application shall be subject to the protection scope of the claims.

## Claims

1. A relay user equipment verification method, wherein the method is applicable to a scenario in which first user equipment UE 1 establishes communication with second user equipment UE 2 through relay user equipment UE, and the method comprises:
receiving, by the UE 1, a first message sent by the relay UE, wherein the first message carries a relay UE identifier;
sending, by the UE 1, a first connection request message to the relay UE, wherein the first connection request message comprises a first token, and the first token is generated based on a first key K1 and the relay UE identifier;
receiving, by the UE 2, a second message sent by the relay UE, wherein the second message comprises the first token and the relay UE identifier;
verifying, by the UE 2, the first token by using the relay UE identifier and a second key K2;
if the first token is successfully verified, sending, by the UE 2, a connection response message to the relay UE; and
receiving, by the UE 1, the connection response message from the relay UE.

2. The method according to claim 1, wherein
before the verifying, by the UE 2, the first token, the method further comprises:
matching, by the UE 2, the relay UE identifier with a relay identifier in a trusted list to obtain a matching result; and
the verifying, by the UE 2, the first token comprises:
if the matching result is that the matching fails, verifying the first token.

3. The method according to claim 2, wherein the method further comprises:
if the first token is successfully verified, adding the relay UE identifier to the trusted list.

4. The method according to any one of claims 1 to 3, wherein the verifying, by the UE 2, the first token by using the relay UE identifier and a second key K2 comprises:
performing, by the UE 2, calculation by using the relay UE identifier and K2 as input parameters, to obtain a second token, wherein K2 and K1 are symmetric keys; and
matching, by the UE 2, the first token with the second token to obtain a verification result.

5. The method according to any one of claims 1 to 4, wherein the method further comprises:
if the UE 2 successfully verifies the first token, generating, by the UE 2, a third key K3; and
the sending, by the UE 2, a connection response message to the relay UE comprises:
sending, by the UE 2 to the relay UE, the connection response message encrypted by using K3.

6. The method according to claim 5, wherein the method further comprises:
in response to the connection response message, generating, by the UE 1, K3 based on K1, and decrypting the connection response message by using K3.

7. The method according to any one of claims 1 to 4, wherein the method further comprises:
if the UE 2 successfully verifies the first token, performing, by the UE 2, calculation by using K2 and the relay UE identifier as input parameters, to obtain a third token; and
the sending, by the UE 2, a connection response message to the relay UE comprises:
sending, by the UE 2 to the relay UE, the connection response message comprising the third token.

8. The method according to claim 7, wherein the method further comprises:
verifying, by the UE 1, the third token by using the relay UE identifier and K1; and
if the third token is successfully verified, sending, by the UE 1 to the UE 2 through the relay UE, a message that is encrypted by using K1 or a key derived from K1.

9. The method according to any one of claims 1 to 4, wherein the method further comprises:
if the UE 2 successfully verifies the first token, generating, by the UE 2, a third key K3 by using K2; and
performing, by the UE 2, calculation by using K3 and the relay UE identifier as input parameters, to obtain a third token; and
the sending, by the UE 2, a connection response message to the relay UE comprises:
sending, by the UE 2 to the relay UE, the connection response message comprising the third token.

10. The method according to claim 9, wherein the method further comprises:
generating, by the UE 1, K3 by using K1, and verifies the third token by using the relay UE identifier and K3; and
if the third token is successfully verified, sending, by the UE 1 to the UE 2 through the relay UE, a message that is encrypted by using K1 or a key derived from K1.

11. The method according to any one of claims 1 to 10, wherein the input parameters further comprise at least one parameter of an identifier of the UE 1, an identifier of the UE 2, a group identifier of a group to which the UE 1 and the UE 2 belong, and a first fresh parameter.

12. The method according to any one of claims 1 to 11, wherein the first message further carries a digital signature of the relay UE, and before the UE 1 performs calculation by using the relay UE identifier and the first key K1 as input parameters, to obtain the first token, the method further comprises:
verifying, by the UE 1, the digital signature of the relay UE by using a public key of the relay UE, to obtain a verification result of the digital signature; and
the performing, by the UE 1, calculation by using the relay UE identifier and the first key K1 as input parameters, to obtain the first token comprises:
if the verification result of the digital signature is that the verification succeeds, performing, by the UE 1, calculation by using the relay UE identifier and the first key K1 as the input parameters, to obtain the first token.

13. A communication apparatus, wherein the communication apparatus is used in a scenario in which a communication connection is established to target user equipment through relay user equipment UE, and the communication apparatus comprises:
a receiving module, configured to receive a first message sent by the relay UE, wherein the first message carries a relay UE identifier; and
a sending module, configured to send a first connection request message to the relay UE, wherein the first connection request message comprises a first token, and the first token is generated based on a first key K1 and the relay UE identifier, wherein
the receiving module is further configured to receive a connection response message sent by the relay UE.

14. The communication apparatus according to claim 13, wherein the apparatus further comprises:
a processing module, configured to: generate K3 based on K1, and decrypt the connection response message by using K3.

15. The communication apparatus according to claim 13, wherein the connection response message comprises a third token, and the apparatus further comprises:
a processing module, configured to verify the third token, wherein
the sending module is further configured to: after the third token is successfully verified, send, to the UE 2 through the relay UE, a message that is encrypted by using K1 or a key derived from K1.

16. The communication apparatus according to claim 15, wherein
the processing module is specifically configured to verify the third token by using the relay UE identifier and K1.

17. The communication apparatus according to claim 15, wherein
the processing module is specifically configured to: generate a third key K3 by using K1, and verify the third token by using the relay UE identifier and K3.

18. The communication apparatus according to any one of claims 13 to 17, wherein
input parameters for generating the first token further comprise at least one parameter of an identifier of UE 1, an identifier of the UE 2, a group identifier of a group to which the UE 1 and the UE 2 belong, and a first fresh parameter.

19. The communication apparatus according to any one of claims 13 to 18, wherein
the first message further carries a digital signature of the relay UE; and
the processing module is further configured to: verify the digital signature of the relay UE by using a public key of the relay UE, to obtain a verification result of the digital signature; and if the verification result of the digital signature is that the verification succeeds, perform calculation by using the first relay UE identifier and K1 as input parameters, to obtain the first token.

20. A communication method, applied to a scenario in which a communication connection is established to target user equipment through relay user equipment UE, wherein the method comprises:
receiving a first message sent by the relay UE, wherein the first message carries a relay UE identifier;
sending a first connection request message to the relay UE, wherein the first connection request message comprises a first token, and the first token is generated based on a first key K1 and the relay UE identifier; and
receiving a connection response message sent by the relay UE.

21. The method according to claim 20, wherein the method further comprises:
generating K3 based on K1, and decrypting the connection response message by using K3.

22. The method according to claim 20 or 21, wherein the connection response message comprises a third token, and the method further comprises:
verifying the third token; and
after the third token is successfully verified, sending, to UE 2 through the relay UE, a message that is encrypted by using K1 or a key derived from K1.

23. The method according to claim 22, wherein the verifying the third token comprises:
verifying the third token by using the relay UE identifier and K1.

24. The method according to claim 22 or 23, wherein the verifying the third token comprises:
generating the third key K3 by using K1, and verifying the third token by using the relay UE identifier and K3.

25. The method according to any one of claims 20 to 24, wherein
input parameters for generating the first token further comprise at least one parameter of an identifier of UE 1, an identifier of the UE 2, a group identifier of a group to which the UE 1 and the UE 2 belong, and a first fresh parameter.

26. The method according to any one of claims 20 to 25, wherein the first message further carries a digital signature of the relay UE, and the method further comprises:
verifying the digital signature of the relay UE by using a public key of the relay UE, to obtain a verification result of the digital signature; and if the verification result of the digital signature is that the verification succeeds, performing calculation by using the first relay UE identifier and K1 as input parameters, to obtain the first token.

27. A communication apparatus, wherein the communication apparatus is used in a scenario in which a communication connection is established to source user equipment through relay user equipment UE, and the communication apparatus comprises:
a receiving module, configured to receive a connection request message sent by the relay UE, wherein the connection request message comprises a first token and a relay UE identifier;
a processing module, configured to verify the first token by using a second key K2 and the relay UE identifier; and
a sending module, configured to send a connection response message to the relay UE when the first token is successfully verified.

28. The communication apparatus according to claim 27, wherein
the processing module is further configured to: match the relay UE identifier with a relay identifier in a trusted list to obtain a matching result; and if the matching result is that the matching fails, verify the first token.

29. The communication apparatus according to claim 27, wherein
the processing module is further configured to: when the first token is successfully verified, add the first relay UE identifier to the trusted list.

30. The communication apparatus according to any one of claims 27 to 29, wherein
the processing module is specifically configured to perform calculation by using the relay UE identifier and K2 as input parameters, to obtain a second token, wherein K2 and a first key K1 are symmetric keys, and K1 is a key used by the source user equipment to generate the first token; and
the processing module is configured to match the first token with the second token to obtain a verification result.

31. The apparatus according to any one of claims 27 to 30, wherein
the processing module is further configured to: after the first token is successfully verified, generate a third key K3; and
the sending module is specifically configured to send, to the relay UE, the connection response message encrypted by the processing module by using K3.

32. The apparatus according to any one of claims 27 to 30, wherein
the processing module is further configured to: after the first token is successfully verified, perform calculation by using K2 and the relay UE identifier as input parameters, to obtain a third token; and
the sending module is specifically configured to send, to the relay UE, the connection response message comprising the third token.

33. The apparatus according to any one of claims 27 to 30, wherein
the processing module is configured to: after the first token is successfully verified, generate a fourth key K4 by using K2;
the processing module is further configured to perform calculation by using K4 and the relay UE identifier as input parameters, to obtain a third token; and
the sending module is specifically configured to send, to the relay UE, the connection response message comprising the third token.

34. The communication apparatus according to any one of claims 27 to 33, wherein
the connection request message further carries a digital signature of the relay UE; and
the processing module is further configured to perform verification on the digital signature of the first UE by using a public key of the relay UE, to obtain a verification result of the digital signature; and if the verification result of the digital signature is that the verification succeeds, verify the first token.

35. A communication method, applied to a scenario in which a communication connection is established to source user equipment through relay user equipment UE, wherein the method comprises:
receiving a connection request message sent by the relay UE, wherein the connection request message comprises a first token and a relay UE identifier;
verifying the first token by using a second key K2 and the relay UE identifier; and
when the first token is successfully verified, sending a connection response message to the relay UE.

36. The method according to claim 35, wherein the method further comprises:
matching the relay UE identifier with a relay identifier in a trusted list to obtain a matching result; and if the matching result is that the matching fails, verifying the first token.

37. The method according to claim 36, wherein the method further comprises:
when the first token is successfully verified, add the first relay UE identifier to the trusted list.

38. The method according to any one of claims 35 to 37, wherein the verifying the first token by using a second key K2 and the relay UE identifier comprises:
performing calculation by using the relay UE identifier and K2 as input parameters, to obtain a second token, wherein K2 and a first key K1 are symmetric keys, and K1 is a key used by the source user equipment to generate the first token; and
matching the first token with the second token to obtain a verification result.

39. The method according to any one of claims 35 to 38, wherein the method further comprises:
after the first token is successfully verified, generating a third key K3; and
sending, to the relay UE, the connection response message encrypted by using K3.

40. The method according to any one of claims 35 to 38, wherein
after the first token is successfully verified, calculation is performed by using K2 and the relay UE identifier as input parameters, to obtain a third token; and
the connection response message comprising the third token is sent to the relay UE.

41. The method according to any one of claims 35 to 38, wherein
after the first token is successfully verified, a fourth key K4 is generated by using K2;
calculation is performed by using K4 and the relay UE identifier as input parameters, to obtain a third token; and the connection response message comprising the third token is sent to the relay UE.

42. The method according to claims 35 to 41, wherein the connection request message further carries a digital signature of the relay UE, and the method further comprises:
performing verification on the digital signature of the first UE by using a public key of the relay UE, to obtain a verification result of the digital signature; and if the verification result of the digital signature is that the verification succeeds, verifying the first token.

43. A communication apparatus, comprising:
a receiving module, configured to receive a first connection request message sent by first user equipment UE 1, wherein the first connection request message comprises a first token, and the first token is generated based on a first key K1 and an identifier of the communication apparatus; and
a sending module, configured to send a second connection request message to second user equipment UE 2, wherein the second connection request message comprises the first token and the identifier of the communication apparatus, wherein
the receiving module is further configured to receive a connection response message that is sent by the UE 2 after the UE 2 successfully verifies the first token based on the identifier of the communication apparatus; and
the sending module is further configured to send the connection response message to the UE 1.

44. The communication apparatus according to claim 43, wherein
the connection response message is a connection response message encrypted by the UE 2 by using a third key K3 that is generated after the UE 2 successfully verifies the first token.

45. The communication apparatus according to claim 43 or 44, wherein
the connection response message comprises a third token, and the third token is calculated by the UE by using a second key K2 and the identifier of the communication apparatus as input parameters after the UE successfully verifies the first token.

46. The communication apparatus according to claim 45, wherein
the receiving module is further configured to: receive a message that is encrypted by using K1 or a key derived from K1 and that is sent by the UE 1 after the UE 1 successfully verifies the third token by using the identifier of the communication apparatus and K1; and
the sending module is further configured to send, to the UE 2, the message that is encrypted by using K1 or the key derived from K1.

47. A communication method, applied to a scenario in which source user equipment establishes communication with target user equipment through relay user equipment, wherein the method comprises:
receiving a first connection request message sent by first user equipment UE 1, wherein the first connection request message comprises a first token, and the first token is generated based on a first key K1 and an identifier of the communication apparatus;
sending a second connection request message to second user equipment UE 2, wherein the second connection request message comprises the first token and the identifier of the communication apparatus;
receiving a connection response message that is sent by the UE 2 after the UE 2 successfully verifies the first token based on the identifier of the communication apparatus; and
sending the connection response message to the UE 1.

48. The method according to claim 47, wherein
the connection response message is a connection response message encrypted by the UE 2 by using a third key K3 that is generated after the UE 2 successfully verifies the first token.

49. The method according to claim 47 or 48, wherein
the connection response message comprises a third token, and the third token is calculated by the UE by using a second key K2 and the identifier of the communication apparatus as input parameters after the UE successfully verifies the first token.

50. The method according to claim 49, wherein the method further comprises:
receiving a message that is encrypted by using K1 or a key derived from K1 and that is sent by the UE 1 after the UE 1 successfully verifies the third token by using the identifier of the communication apparatus and K1; and
sending, to the UE 2, the message that is encrypted by using K1 or the key derived from K1.

51. A device, wherein the device comprises a memory configured to store computer instructions, a communication interface configured to send and receive data, and a processor coupled to the memory and the communication interface; and when the computer instructions are run, the processor performs the steps performed by the UE 1 in the method according to any one of claims 1 to 12, or performs the method according to any one of claims 20 to 26.

52. A device, wherein the device comprises a memory configured to store computer instructions, a communication interface configured to send and receive data, and a processor coupled to the memory and the communication interface; and when the computer instructions are run, the processor performs the steps performed by the UE 2 in the method according to any one of claims 1 to 12, or performs the method according to any one of claims 35 to 42.

53. A device, wherein the device comprises a memory configured to store computer instructions, a communication interface configured to send and receive data, and a processor coupled to the memory and the communication interface; and when the computer instructions are run, the processor performs the steps performed by the relay UE in the method according to any one of claims 1 to 12, or performs the method according to any one of claims 47 to 50.

54. A device, wherein the device comprises a communication interface configured to send and receive data and a processor coupled to the communication interface, and the processor is configured to: perform the steps performed by the UE 1 in the method according to any one of claims 1 to 12, or perform the method according to any one of claims 20 to 26, wherein
the processor performs, through the communication interface, data or signaling sending and receiving related to the UE 1 according to any one of claims 1 to 12, or performs the method related to data or signaling sending and receiving according to any one of claims 20 to 26.

55. A device, wherein the device comprises a communication interface configured to send and receive data and a processor coupled to the communication interface, and the processor is configured to: perform the steps performed by the UE 2 in the method according to any one of claims 1 to 12, or perform the method according to any one of claims 20 to 26, wherein
the processor performs, through the communication interface, data or signaling sending and receiving related to the UE 2 according to any one of claims 1 to 12, or performs the method related to data or signaling sending and receiving according to any one of claims 35 to 42.

56. A device, wherein the device comprises a communication interface configured to send and receive data and a processor coupled to the communication interface, and the processor is configured to: perform the steps performed by the relay UE in the method according to any one of claims 1 to 12, or perform the method according to any one of claims 47 to 50, wherein
the processor performs, through the communication interface, data or signaling sending and receiving related to the UE 2 according to any one of claims 1 to 12, or performs the method related to data or signaling sending and receiving according to any one of claims 47 to 50.

57. A non-volatile computer readable storage medium, wherein the non-volatile computer readable storage medium stores a computer program; and when the computer program is executed, the method according to any one of claims 1 to 12 is performed, the method according to any one of claims 20 to 26 is performed; the method according to any one of claims 35 to 42 is performed; or the method according to any one of claims 47 to 50 is performed.

58. A computer program product, wherein when the computer program product runs on a computer, the method according to any one of claims 1 to 12 is performed; the method according to any one of claims 20 to 26 is performed; the method according to any one of claims 35 to 42 is performed; or the method according to any one of claims 47 to 50 is performed.

59. A communication system, comprising the communication apparatus according to any one of claims 13 to 19, the communication apparatus according to any one of claims 27 to 34, and the communication apparatus according to any one of claims 13 to 19 and claims 43 to 46.
